(19) **Europäisches Patentamt / European Patent Office / Office européen des brevets**

(11) **EP 3 844 958 B1**

(12) **EUROPEAN PATENT SPECIFICATION**

(45) Date of publication and mention
of the grant of the patent:
**18.02.2026 Bulletin 2026/08**

(21) Application number: **19765613.5**

(22) Date of filing: **27.08.2019**

(51) International Patent Classification (IPC):
*H04N 19/117* (2014.01)  *H04N 19/176* (2014.01)
*H04N 19/187* (2014.01)  *H04N 19/80* (2014.01)
*H04N 19/86* (2014.01)  *H04N 19/157* (2014.01)
*H04N 19/182* (2014.01)  *H04N 19/82* (2014.01)

(52) Cooperative Patent Classification (CPC):
**H04N 19/117; H04N 19/157; H04N 19/176;
H04N 19/82;** H04N 19/119

(86) International application number:
**PCT/US2019/048353**

(87) International publication number:
**WO 2020/046943 (05.03.2020 Gazette 2020/10)**

(54) **DEBLOCKING FILTER FOR VIDEO CODING AND PROCESSING**

DEBLOCKIERFILTER ZUR VIDEOCODIERUNG UND -VERARBEITUNG

FILTRE DE DÉGROUPAGE POUR UN CODAGE ET UN TRAITEMENT VIDÉO

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.08.2018 US 201862723408 P
06.10.2018 US 201862742331 P
26.08.2019 US 201916551388**

(43) Date of publication of application:
**07.07.2021 Bulletin 2021/27**

(73) Proprietor: **QUALCOMM INCORPORATED
San Diego, California 92121-1714 (US)**

(72) Inventor: **RUSANOVSKYY, Dmytro
San Diego, California 92121-1714 (US)**

(74) Representative: **Reddie & Grose LLP
The White Chapel Building
10 Whitechapel High Street
London E1 8QS (GB)**

(56) References cited:
**EP-A1- 3 200 454      EP-A1- 3 200 454
US-A1- 2013 028 531    US-A1- 2013 028 531**

- **RUSANOVSKYY (QUALCOMM) D ET AL: "CE2: Tests on long deblocking (CE2.2.1.4)", no. JVET-K0334, 11 July 2018 (2018-07-11), XP030199451, Retrieved from the Internet <URL:http://phenix. int-evry.fr/jvet/doc_end_user/documents/ 11_Ljubljana/wg11/JVET-K0334-v4.zip JVET-K0334_C2.2.1.4_r1.docx> [retrieved on 20180711]**
- **DONG J ET AL: "Multi-Dimensional Filter Selection for Deblocking", 10. JVET MEETING; 10-4-2018 - 20-4-2018; SAN DIEGO; (THE JOINT VIDEO EXPLORATION TEAM OF ISO/IEC JTC1/ SC29/WG11 AND ITU-T SG.16 ); URL: HTTP:// PHENIX.INT-EVRY.FR/JVET/,, no. JVET-J0056-v3, 13 April 2018 (2018-04-13), XP030151241**
- **RUSANOVSKYY (QUALCOMM) D ET AL: "CE2: Tests on long deblocking (CE2.2.1.4)", no. JVET-K0334, 11 July 2018 (2018-07-11), XP030199451, Retrieved from the Internet <URL:http://phenix. int-evry.fr/jvet/doc_end_user/documents/ 11_Ljubljana/wg11/JVET-K0334-v4.zip JVET-K0334_C2.2.1.4_r1.docx> [retrieved on 20180711]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**(Cont. next page)**

- **DONG J ET AL: "Multi-Dimensional Filter Selection for Deblocking", 10. JVET MEETING; 10-4-2018 - 20-4-2018; SAN DIEGO; (THE JOINT VIDEO EXPLORATION TEAM OF ISO/IEC JTC1/ SC29/WG11 AND ITU-T SG.16 ); URL: HTTP:// PHENIX.INT-EVRY.FR/JVET/,, no. JVET-J0056-v3, 13 April 2018 (2018-04-13), XP030151241**

## Description

### TECHNICAL FIELD

This disclosure relates to video encoding and video decoding.

### BACKGROUND

Digital video capabilities can be incorporated into a wide range of devices, including digital televisions, digital direct broadcast systems, wireless broadcast systems, personal digital assistants (PDAs), laptop or desktop computers, tablet computers, e-book readers, digital cameras, digital recording devices, digital media players, video gaming devices, video game consoles, cellular or satellite radio telephones, so-called "smart phones," video teleconferencing devices, video streaming devices, and the like. Digital video devices implement video coding techniques, such as those described in the standards defined by MPEG-2, MPEG-4, ITU-T H.263, ITU-T H.264/MPEG-4, Part 10, Advanced Video Coding (AVC), the High Efficiency Video Coding (HEVC) standard, ITU-T H.265/High Efficiency Video Coding (HEVC), and extensions of such standards. The video devices may transmit, receive, encode, decode, and/or store digital video information more efficiently by implementing such video coding techniques.

Video coding techniques include spatial (intra-picture) prediction and/or temporal (inter-picture) prediction to reduce or remove redundancy inherent in video sequences. For block-based video coding, a video slice (e.g., a video picture or a portion of a video picture) may be partitioned into video blocks, which may also be referred to as coding tree units (CTUs), coding units (CUs) and/or coding nodes. Video blocks in an intra-coded (I) slice of a picture are encoded using spatial prediction with respect to reference samples in neighboring blocks in the same picture. Video blocks in an inter-coded (P or B) slice of a picture may use spatial prediction with respect to reference samples in neighboring blocks in the same picture or temporal prediction with respect to reference samples in other reference pictures. Pictures may be referred to as frames, and reference pictures may be referred to as reference frames.

In the article "CE2: Tests on long deblocking (CE2.2.1.4)" of Rusanovskyy et al (Joint Video Experts Team (JVET) of ITU-T SG 16 WP 3 and ISO/IEC JTC 1/SC 29/WG 11, 11th Meeting: Ljubljana, document no. JVET-K0334r1), there are reported results of tests of a change to deblocking filtering method submitted as part of the JVET project. A long deblocking filter is applied to boundary samples of the blocks, with size (orthogonal to boundary) equal or large than 16. Boundary samples of the blocks with size (orthogonal to the boundary) smaller than 16 are filtered with HEVC deblocking. Total number of 4 samples are filtered from each side of the boundary.

In the article "Multi-Dimensional Filter Selection for Deblocking" of Dong et al (Joint Video Experts Team (JVET) of ITU-T SG 16 WP 3 and ISO/IEC JTC 1/SC 29/WG 11, 10th Meeting: San Diego, document no. JVET-J0056-v2), there is presented presents a multi-dimensional filter selection scheme for deblocking. The filter selection for a sample is four-dimensional, i.e., determined by four facts: the average local activities of Blocks P and Q, the difference of local activities of Blocks P and Q, the type of the belonged block (Type 0 or Type 1), and the distance from the segment. Given a combination of the four facts, the filter index is not fixed, but adaptively determined by the encoder and signaled in the bitstream.

US 2013/0028531 A1, a deblocking filter performs filtering of decoded image data obtained by decoding image data encoded for each block, so as to remove block distortion. If at least one of block sizes on adjacent sides of two adjacent blocks is extended larger than a predetermined block size, a filter setting unit sets the tap length to an extended length to increase the strength of distortion removal, or sets a filtering object pixel range to an extended range. When a macroblock having an extended size is used, the degree of smoothing is increased, and pixels including those distant from the block boundary are subjected to filtering.

EP 3,200,454 A1 there is described a method of encoding a video that includes determining a filtering boundary on which deblocking filtering is to be performed based on at least one data unit from among coding units that are hierarchically configured according to depths indicating a number of times at least one maximum coding unit is spatially spilt, and prediction units and transformation units respectively for prediction and transformation of the coding units, determining filtering strength at the filtering boundary based on a prediction mode of a coding unit to which adjacent pixels belong based on the filtering boundary, and transformation coefficient values of pixels adjacent to the filtering boundary, and performing deblocking filtering based on the determined filtering strength.

### SUMMARY

This disclosure describes techniques associated with filtering reconstructed video data in a video encoding and/or video decoding process and, more particularly, this disclosure describes techniques related to techniques for performing deblocking filtering. Deblocking filtering is a type of filtering that may reduce blockiness artifacts along the edges of blocks that result from the reconstruction process.

The invention is defined by the independent claims. Optional features present in some embodiments are set out in the dependent claims.

According to an example, a method of decoding video data includes obtaining a first reconstructed block of video data, wherein the first reconstructed block includes a first sample with a first value; applying deblocking filtering to the first reconstructed block to create a deblocking filtered block; determining a first clipping value for the first sample based on a location of the first sample relative to a boundary of the first reconstructed block and based on a size of the first reconstructed block; comparing the first clipping value to an amount of modification to the first sample caused by the deblocking filtering; in response to the amount of modification to the first sample caused by the deblocking filtering being greater than the first clipping value, modifying the first value by the first clipping value to determine a first filtered value for the first sample; and outputting a deblocking filtered block of video data, wherein in the deblocking filtered block, the first sample has the first filtered value.

According to another example, a device for decoding video data includes a memory configured to store video data and one or more processors implemented in circuitry and configured to obtain a first reconstructed block of video data, wherein the first reconstructed block includes a first sample with a first value; apply deblocking filtering to the first reconstructed block to create a deblocking filtered block; determine a first clipping value for the first sample based on a location of the first sample relative to a boundary of the first reconstructed block and based on a size of the first reconstructed block; compare the first clipping value to an amount of modification to the first sample caused by the deblocking filtering; in response to the amount of modification to the first sample caused by the deblocking filtering being greater than the first clipping value, modify the first value by the first clipping value to determine a first filtered value for the first sample; and output a deblocking filtered block of video data, wherein in the deblocking filtered block, the first sample has the first filtered value.

According to another example, a computer-readable storage medium stores instructions that when executed by one or more processors cause the one or more processor to obtain a first reconstructed block of video data, wherein the first reconstructed block includes a first sample with a first value; apply deblocking filtering to the first reconstructed block to create a deblocking filtered block; determine a first clipping value for the first sample based on a location of the first sample relative to a boundary of the first reconstructed block and based on a size of the first reconstructed block; compare the first clipping value to an amount of modification to the first sample caused by the deblocking filtering; in response to the amount of modification to the first sample caused by the deblocking filtering being greater than the first clipping value, modify the first value by the first clipping value to determine a first filtered value for the first sample; and output a deblocking filtered block of video data, wherein in the deblocking filtered block, the first sample has the first filtered value.

According to another example, an apparatus for decoding video data includes means for obtaining a first reconstructed block of video data, wherein the first reconstructed block includes a first sample with a first value; means for applying deblocking filtering to the first reconstructed block to create a deblocking filtered block; means for determining a first clipping value for the first sample based on a location of the first sample relative to a boundary of the first reconstructed block and based on a size of the first reconstructed block; means for comparing the first clipping value to an amount of modification to the first sample caused by the deblocking filtering; means for modifying the first value by the first clipping value to determine a first filtered value for the first sample in response to the amount of modification to the first sample caused by the deblocking filtering being greater than the first clipping value; and means for outputting a deblocking filtered block of video data, wherein in the deblocking filtered block, the first sample has the first filtered value.

The details of one or more examples are set forth in the accompanying drawings and the description below. Other features, objects, and advantages will be apparent from the description, drawings, and claims.

**BRIEF DESCRIPTION OF DRAWINGS**

FIG. 1 is a block diagram illustrating an example video encoding and decoding system that may perform the techniques of this disclosure.

FIGS. 2A and 2B are conceptual diagrams illustrating an example quadtree binary tree (QTBT) structure, and a corresponding coding tree unit (CTU).

FIG. 3 shows an example of a four-sample segment to be deblocked with adjacent blocks P and Q.

FIG. 4 shows an example block of video data, where the second derivatives of the four circled samples are calculated, of which the summation is used to determine whether deblocking should be applied on a segment.

FIG. 5 shows an example of samples of a block of video data for one of the four lines in a segment to be deblocked.

FIG. 6 is a block diagram illustrating an example video encoder that may perform the techniques of this disclosure.

FIG. 7 is a block diagram illustrating an example video decoder that may perform the techniques of this disclosure.

FIG. 8 is a block diagram illustrating an example filter unit for performing the techniques of this disclosure.

FIG. 9 is a flowchart illustrating an example of a video encoding process.

FIG. 10 is a flowchart illustrating an example of a video decoding process.

FIG. 11 is a flowchart illustrating an example of a video decoding process.

DETAILED DESCRIPTION

Video coding (e.g., video encoding and/or video decoding) typically involves predicting a block of video data from either an already coded block of video data in the same picture (e.g., intra prediction) or an already coded block of video data in a different picture (e.g., inter prediction). In some instances, the video encoder also calculates residual data by comparing the prediction block to the original block. Thus, the residual data represents a difference between the prediction block and the original block. To reduce the number of bits needed to signal the residual data, the video encoder transforms and quantizes the residual data and signals the transformed and quantized residual data in the encoded bitstream. The compression achieved by the transform and quantization processes may be lossy, meaning that transform and quantization processes may introduce distortion into the decoded video data.

A video decoder decodes and adds the residual data to the prediction block to produce a reconstructed video block that matches the original video block more closely than the prediction block alone. Due to the loss introduced by the transforming and quantizing of the residual data, the first reconstructed block may have distortion or artifacts. One common type of artifact or distortion is referred to as blockiness, where the boundaries of the blocks used to code the video data are visible.

To further improve the quality of decoded video, a video decoder can perform one or more filtering operations on the reconstructed video blocks. Examples of these filtering operations include deblocking filtering, sample adaptive offset (SAO) filtering, and adaptive loop filtering (ALF). Parameters for these filtering operations may either be determined by a video encoder and explicitly signaled in the encoded video bitstream or may be implicitly determined by a video decoder without needing the parameters to be explicitly signaled in the encoded video bitstream.

This disclosure describes techniques associated with filtering reconstructed video data in a video encoding and/or video decoding process and, more particularly, this disclosure describes techniques related to deblocking filtering. Deblocking filtering is a type of filtering specifically designed to reduce blockiness. This disclosure describes techniques related to a filtering process performed on video frames or pictures, such as video frames or pictures which may be distorted by compression, blurring, etc., but the techniques should not be considered limited to the above examples of distortion. The techniques may improve the objective and subjective qualities of the video. The techniques described herein may be used in the design of new video coding solutions, such as H.266, or for extending any of the existing video codecs, such as H.265/High Efficiency Video Coding (HEVC), or may be proposed as a promising coding tool for future video coding standards. The described techniques may also be used as a post-processing method on video frames outputted from either standard or proprietary codecs.

Current versions of HEVC utilize a maximum block size of 64x64. Future video coding standards, such as the Versatile Video Coding standard presently under development, may, however, use larger block sizes than 64x64. This disclosure describes techniques that may improve the distortion reduction obtained from deblocking filtering, particularly in conjunction with larger block sizes. Furthermore, the techniques described herein may obtain this improved distortion reduction while maintaining desired levels of computational complexity and coding efficiency.

As used in this disclosure, the term video coding generically refers to either video encoding or video decoding. Similarly, the term video coder may generically refer to a video encoder or a video decoder. Moreover, certain techniques described in this disclosure with respect to video decoding may also apply to video encoding, and vice versa. For example, often times video encoders and video decoders are configured to perform the same process, or reciprocal processes. Also, a video encoder typically performs video decoding (also called reconstruction) as part of the processes of determining how to encode video data. For example, a video encoder may perform deblocking filtering on decoded video blocks in order to determine whether a certain encoding scheme produces a desirable rate-distortion tradeoff and also so that the video encoder can perform motion estimation using the same blocks available to a video decoder when the video decoder performs motion compensation.

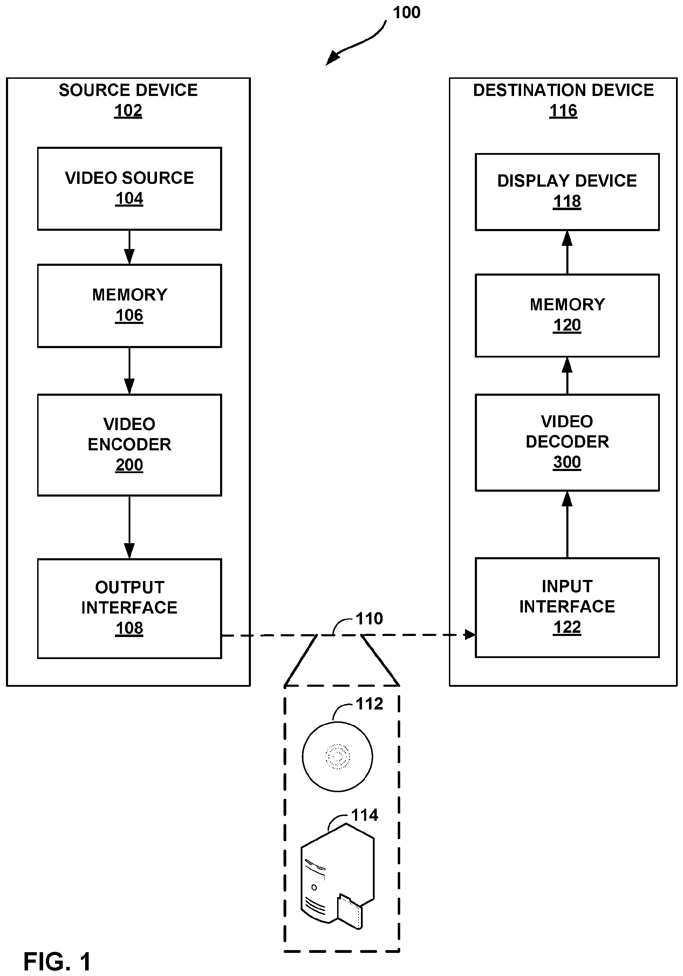

FIG. 1 is a block diagram illustrating an example video encoding and decoding system 100 that may perform the deblocking filtering techniques of this disclosure. The techniques of this disclosure are generally directed to coding (encoding and/or decoding) video data, and more specifically, to techniques for deblocking filtering video data. In general, video data includes any data for processing a video. Thus, video data may include raw, uncoded video, encoded video, decoded (e.g., reconstructed) video, and video metadata, such as signaling data.

As shown in FIG. 1, system 100 includes a source device 102 that provides encoded video data to be decoded and displayed by a destination device 116, in this example. In particular, source device 102 provides the video data to destination device 116 via a computer-readable medium 110. Source device 102 and destination device 116 may be any of a wide range of devices, including desktop computers, notebook (i.e., laptop) computers, tablet computers, set-top boxes, telephone handsets such as smartphones, televisions, cameras, display devices, digital media players, video gaming consoles, video streaming device, or the like. In some cases, source device 102 and destination device 116 may be equipped for wireless communication, and thus may be referred to as wireless communication devices.

In the example of FIG. 1, source device 102 includes video source 104, memory 106, video encoder 200, and output interface 108. Destination device 116 includes input interface 122, video decoder 300, memory 120, and display device 118. In accordance with this disclosure, video encoder 200 of source device 102 and video decoder 300 of destination device 116 may be configured to apply the techniques for deblocking filtering described in this disclosure. Thus, source device 102 represents an example of a video encoding device, while destination device 116 represents an example of a video decoding device. In other examples, a source device and a destination device may include other components or arrangements. For example, source device 102 may receive video data from an external video source, such as an external camera. Likewise, destination device 116 may interface with an external display device, rather than include an integrated display device.

System 100 as shown in FIG. 1 is merely one example. In general, any digital video encoding and/or decoding device may perform techniques for deblocking filtering described in this disclosure. Source device 102 and destination device 116 are merely examples of such coding devices in which source device 102 generates coded video data for transmission to destination device 116. This disclosure refers to a "coding" device as a device that performs coding (encoding and/or decoding) of data. Thus, video encoder 200 and video decoder 300 represent examples of coding devices, in particular, a video encoder and a video decoder, respectively. In some examples, source devices 102 and destination device 116 may operate in a substantially symmetrical manner such that each of source devices 102 and destination device 116 includes video encoding and decoding components. Hence, system 100 may support one-way or two-way video transmission between source device 102 and destination device 116, e.g., for video streaming, video playback, video broadcasting, or video telephony.

In general, video source 104 represents a source of video data (i.e., raw, uncoded video data) and provides a sequential series of pictures (also referred to as "frames") of the video data to video encoder 200, which encodes data for the pictures. Video source 104 of source device 102 may include a video capture device, such as a video camera, a video archive containing previously captured raw video, and/or a video feed interface to receive video from a video content provider. As a further alternative, video source 104 may generate computer graphics-based data as the source video, or a combination of live video, archived video, and computer-generated video. In each case, video encoder 200 encodes the captured, pre-captured, or computer-generated video data. Video encoder 200 may rearrange the pictures from the received order (sometimes referred to as "display order") into a coding order for coding. Video encoder 200 may generate a bitstream including encoded video data. Source device 102 may then output the encoded video data via output interface 108 onto computer-readable medium 110 for reception and/or retrieval by, e.g., input interface 122 of destination device 116.

Memory 106 of source device 102 and memory 120 of destination device 116 represent general purpose memories. In some example, memories 106, 120 may store raw video data, e.g., raw video from video source 104 and raw, decoded video data from video decoder 300. Additionally or alternatively, memories 106, 120 may store software instructions executable by, e.g., video encoder 200 and video decoder 300, respectively. Although memories 106 and 120 are shown separately from video encoder 200 and video decoder 300 in this example, it should be understood that video encoder 200 and video decoder 300 may also include internal memories for functionally similar or equivalent purposes. Furthermore, memories 106, 120 may store encoded video data, e.g., output from video encoder 200 and input to video decoder 300. In some examples, portions of memories 106, 120 may be allocated as one or more video buffers, e.g., to store raw, decoded, and/or encoded video data.

Computer-readable medium 110 may represent any type of medium or device capable of transporting the encoded video data from source device 102 to destination device 116. In one example, computer-readable medium 110 represents a communication medium to enable source device 102 to transmit encoded video data directly to destination device 116 in real-time, e.g., via a radio frequency network or computer-based network. Output interface 108 may modulate a transmission signal including the encoded video data, and input interface 122 may demodulate the received transmission signal, according to a communication standard, such as a wireless communication protocol. The communication medium may include one or both of a wireless or wired communication medium, such as a radio frequency (RF) spectrum or one or more physical transmission lines. The communication medium may form part of a packet-based network, such as a local area network, a wide-area network, or a global network such as the Internet. The communication medium may include routers, switches, base stations, or any other equipment that may be useful to facilitate communication from source device 102 to destination device 116.

In some examples, computer-readable medium 110 may include storage device 112. Source device 102 may output encoded data from output interface 108 to storage device 112. Similarly, destination device 116 may access encoded data from storage device 112 via input interface 122. Storage device 112 may include any of a variety of distributed or locally accessed data storage media such as a hard drive, Blu-ray discs, DVDs, CD-ROMs, flash memory, volatile or non-volatile memory, or any other suitable digital storage media for storing encoded video data.

In some examples, computer-readable medium 110 may include file server 114 or another intermediate storage device that may store the encoded video data generated by source device 102. Source device 102 may output encoded video data to file server 114. Destination device 116 may access stored video data from file server 114 via streaming or download. File server 114 may be any type of server device capable of storing encoded video data and transmitting that encoded video data to the destination device 116. File server 114 may represent a web server (e.g., for a website), a File Transfer Protocol (FTP) server, a content delivery network device, or a network attached storage (NAS) device. Destination device 116 may access encoded video data from file server 114 through any standard data connection, including an Internet connection. This may include a wireless channel (e.g., a Wi-Fi connection), a wired connection (e.g., digital subscriber line (DSL), cable modem, etc.), or a combination of both that is suitable for accessing encoded video data stored on file server 114. File server 114 and input interface 122 may be configured to operate according to a streaming transmission protocol, a download transmission protocol, or a combination thereof.

Output interface 108 and input interface 122 may represent wireless transmitters/receivers, modems, wired networking components (e.g., Ethernet cards), wireless communication components that operate according to any of a variety of IEEE 802.11 standards, or other physical components. In examples where output interface 108 and input interface 122 include wireless components, output interface 108 and input interface 122 may be configured to transfer data, such as encoded video data, according to a cellular communication standard, such as 4G, 4G-LTE (Long-Term Evolution), LTE Advanced, 5G, or the like. In some examples where output interface 108 includes a wireless transmitter, output interface 108 and input interface 122 may be configured to transfer data, such as encoded video data, according to other wireless standards, such as an IEEE 802.11 specification, an IEEE 802.15 specification (e.g., ZigBee™), a Bluetooth™ standard, or the like. In some examples, source device 102 and/or destination device 116 may include respective system-on-a-chip (SoC) devices. For example, source device 102 may include an SoC device to perform the functionality attributed to video encoder 200 and/or output interface 108, and destination device 116 may include an SoC device to perform the functionality attributed to video decoder 300 and/or input interface 122.

The techniques of this disclosure may be applied to video coding in support of any of a variety of multimedia applications, such as over-the-air television broadcasts, cable television transmissions, satellite television transmissions, Internet streaming video transmissions, such as dynamic adaptive streaming over HTTP (DASH), digital video that is encoded onto a data storage medium, decoding of digital video stored on a data storage medium, or other applications.

Input interface 122 of destination device 116 receives an encoded video bitstream from computer-readable medium 110 (e.g., a communication medium, storage device 112, file server 114, or the like). The encoded video bitstream from computer-readable medium 110 may include signaling information defined by video encoder 200, which is also used by video decoder 300, such as syntax elements having values that describe characteristics and/or processing of video blocks or other coded units (e.g., slices, pictures, groups of pictures, sequences, or the like). Display device 118 displays decoded pictures of the decoded video data to a user. Display device 118 may represent any of a variety of display devices such as a cathode ray tube (CRT), a liquid crystal display (LCD), a plasma display, an organic light emitting diode (OLED) display, or another type of display device.

Although not shown in FIG. 1, in some examples, video encoder 200 and video decoder 300 may each be integrated with an audio encoder and/or audio decoder, and may include appropriate MUX-DEMUX units, or other hardware and/or software, to handle multiplexed streams including both audio and video in a common data stream. If applicable, MUX-DEMUX units may conform to the ITU H.223 multiplexer protocol, or other protocols such as the user datagram protocol (UDP).

Video encoder 200 and video decoder 300 each may be implemented as any of a variety of suitable encoder and/or decoder circuitry, such as one or more microprocessors, digital signal processors (DSPs), application specific integrated circuits (ASICs), field programmable gate arrays (FPGAs), discrete logic, software, hardware, firmware or any combinations thereof. When the techniques are implemented partially in software, a device may store instructions for the software in a suitable, non-transitory computer-readable medium and execute the instructions in hardware using one or more processors to perform the techniques of this disclosure. Each of video encoder 200 and video decoder 300 may be included in one or more encoders or decoders, either of which may be integrated as part of a combined encoder/decoder (CODEC) in a respective device. A device including video encoder 200 and/or video decoder 300 may include an integrated circuit, a microprocessor, and/or a wireless communication device, such as a cellular telephone.

Video encoder 200 and video decoder 300 may operate according to a video coding standard, such as ITU-T H.265, also referred to as High Efficiency Video Coding (HEVC) or extensions thereto, such as the multi-view and/or scalable video coding extensions. In other examples, video encoder 200 and video decoder 300 may operate according to other proprietary or industry standards, such as the Joint Exploration Test Model (JEM) or ITU-T H.266, also referred to as Versatile Video Coding (VVC). A recent draft of the VVC standard is described in Bross, et al. "Versatile Video Coding (Draft 6)," Joint Video Experts Team (JVET) of ITU-T SG 16 WP 3 and ISO/IEC JTC 1/SC 29/WG 11, 15th Meeting: Gothenburg, SE, 3-12 July 2019, JVET-O2001-vE (hereinafter "VVC Draft 6"). The techniques of this disclosure, however, are not limited to any particular coding standard.

In general, video encoder 200 and video decoder 300 may perform block-based coding of pictures. The term "block" generally refers to a structure including data to be processed (e.g., encoded, decoded, or otherwise used in the encoding and/or decoding process). For example, a block may include a two-dimensional matrix of samples of luminance and/or chrominance data. In general, video encoder 200 and video decoder 300 may code video data represented in a YUV (e.g., Y, Cb, Cr) format. That is, rather than coding red, green, and blue (RGB) data for samples of a picture, video encoder 200 and video decoder 300 may code luminance and chrominance components, where the chrominance components may include both red hue and blue hue chrominance components. In some examples, video encoder 200 converts received RGB formatted data to a YUV representation prior to encoding, and video decoder 300 converts the YUV representation to the RGB format. Alternatively, pre- and post-processing units (not shown) may perform these conversions.

This disclosure may generally refer to coding (e.g., encoding and decoding) of pictures to include the process of encoding or decoding data of the picture. Similarly, this disclosure may refer to coding of blocks of a picture to include the process of encoding or decoding data for the blocks, e.g., prediction and/or residual coding. An encoded video bitstream generally includes a series of values for syntax elements representative of coding decisions (e.g., coding modes) and partitioning of pictures into blocks. Thus, references to coding a picture or a block should generally be understood as coding values for syntax elements forming the picture or block.

HEVC defines various blocks, including coding units (CUs), prediction units (PUs), and transform units (TUs). According to HEVC, a video coder (such as video encoder 200) partitions a coding tree unit (CTU) into CUs according to a quadtree structure. That is, the video coder partitions CTUs and CUs into four equal, nonoverlapping squares, and each node of the quadtree has either zero or four child nodes. Nodes without child nodes may be referred to as "leaf nodes," and CUs of such leaf nodes may include one or more PUs and/or one or more TUs. The video coder may further partition PUs and TUs. For example, in HEVC, a residual quadtree (RQT) represents partitioning of TUs. In HEVC, PUs represent inter- or intra-prediction data, while TUs represent residual data. CUs that are intra-predicted include intra-prediction information, such as an intra-mode indication.

Video encoder 200 and video decoder 300 may operate according to a video coding standard, such as ITU-T H.265, also referred to as High Efficiency Video Coding (HEVC) or extensions thereto, such as the multi-view and/or scalable video coding extensions. Alternatively, video encoder 200 and video decoder 300 may operate according to other proprietary or industry standards, such as the Joint Exploration Test Model (JEM) or ITU-T H.266, also referred to as Versatile Video Coding (VVC). A recent draft of the VVC standard is described in Bross, et al. "Versatile Video Coding (Draft 6)," Joint Video Experts Team (JVET) of ITU-T SG 16 WP 3 and ISO/IEC JTC 1/SC 29/WG 11, 15th Meeting: Gothenburg, SE, 3-12 July 2019, JVET-O2001-vE (hereinafter "VVC Draft 6"). The techniques of this disclosure, however, are not limited to any particular coding standard.

In general, video encoder 200 and video decoder 300 may perform block-based coding of pictures. The term "block" generally refers to a structure including data to be processed (e.g., encoded, decoded, or otherwise used in the encoding and/or decoding process). For example, a block may include a two-dimensional matrix of samples of luminance and/or chrominance data. In general, video encoder 200 and video decoder 300 may code video data represented in a YUV (e.g., Y, Cb, Cr) format. That is, rather than coding red, green, and blue (RGB) data for samples of a picture, video encoder 200 and video decoder 300 may code luminance and chrominance components, where the chrominance components may include both red hue and blue hue chrominance components. In some examples, video encoder 200 converts received RGB formatted data to a YUV representation prior to encoding, and video decoder 300 converts the YUV representation to the RGB format. Alternatively, pre- and post-processing units (not shown) may perform these conversions.

This disclosure may generally refer to coding (e.g., encoding and decoding) of pictures to include the process of encoding or decoding data of the picture. Similarly, this disclosure may refer to coding of blocks of a picture to include the process of encoding or decoding data for the blocks, e.g., prediction and/or residual coding. An encoded video bitstream generally includes a series of values for syntax elements representative of coding decisions (e.g., coding modes) and partitioning of pictures into blocks. Thus, references to coding a picture or a block should generally be understood as coding values for syntax elements forming the picture or block.

HEVC defines various blocks, including coding units (CUs), prediction units (PUs), and transform units (TUs). According to HEVC, a video coder (such as video encoder 200) partitions a coding tree unit (CTU) into CUs according to a quadtree structure. That is, the video coder partitions CTUs and CUs into four equal, nonoverlapping squares, and each node of the quadtree has either zero or four child nodes. Nodes without child nodes may be referred to as "leaf nodes," and CUs of such leaf nodes may include one or more PUs and/or one or more TUs. The video coder may further partition PUs and TUs. For example, in HEVC, a residual quadtree (RQT) represents partitioning of TUs. In HEVC, PUs represent inter-prediction data, while TUs represent residual data. CUs that are intra-predicted include intra-prediction information, such as an intra-mode indication.

As another example, video encoder 200 and video decoder 300 may be configured to operate according to JEM or VVC. According to JEM or VVC, a video coder (such as video encoder 200) partitions a picture into a plurality of coding tree units (CTUs). Video encoder 200 may partition a CTU according to a tree structure, such as a quadtree-binary tree (QTBT) structure or Multi-Type Tree (MTT) structure. The QTBT structure removes the concepts of multiple partition types, such as the separation between CUs, PUs, and TUs of HEVC. A QTBT structure includes two levels: a first level partitioned according to quadtree partitioning, and a second level partitioned according to binary tree partitioning. A root node of the QTBT structure corresponds to a CTU. Leaf nodes of the binary trees correspond to coding units (CUs).

In an MTT partitioning structure, blocks may be partitioned using a quadtree (QT) partition, a binary tree (BT) partition, and one or more types of triple tree (TT) (also called ternary tree (TT)) partitions. A triple or ternary tree partition is a partition where a block is split into three sub-blocks. In some examples, a triple or ternary tree partition divides a block into three sub-blocks without dividing the original block through the center. The partitioning types in MTT (e.g., QT, BT, and TT), may be symmetrical or asymmetrical.

In some examples, video encoder 200 and video decoder 300 may use a single QTBT or MTT structure to represent each of the luminance and chrominance components, while in other examples, video encoder 200 and video decoder 300 may use two or more QTBT or MTT structures, such as one QTBT/MTT structure for the luminance component and another QTBT/MTT structure for both chrominance components (or two QTBT/MTT structures for respective chrominance components).

Video encoder 200 and video decoder 300 may be configured to use quadtree partitioning per HEVC, QTBT partitioning, MTT partitioning, or other partitioning structures. For purposes of explanation, the description of the techniques of this disclosure is presented with respect to QTBT partitioning. However, it should be understood that the techniques of this disclosure may also be applied to video coders configured to use quadtree partitioning, or other types of partitioning as well.

The blocks (e.g., CTUs or CUs) may be grouped in various ways in a picture. As one example, a brick may refer to a rectangular region of CTU rows within a particular tile in a picture. A tile may be a rectangular region of CTUs within a particular tile column and a particular tile row in a picture. A tile column refers to a rectangular region of CTUs having a height equal to the height of the picture and a width specified by syntax elements (e.g., such as in a picture parameter set). A tile row refers to a rectangular region of CTUs having a height specified by syntax elements (e.g., such as in a picture parameter set) and a width equal to the width of the picture.

In some examples, a tile may be partitioned into multiple bricks, each of which may include one or more CTU rows within the tile. A tile that is not partitioned into multiple bricks may also be referred to as a brick. However, a brick that is a true subset of a tile may not be referred to as a tile.

The bricks in a picture may also be arranged in a slice. A slice may be an integer number of bricks of a picture that may be exclusively contained in a single network abstraction layer (NAL) unit. In some examples, a slice includes either a number of complete tiles or only a consecutive sequence of complete bricks of one tile.

This disclosure may use "NxN" and "N by N" interchangeably to refer to the sample dimensions of a block (such as a CU or other video block) in terms of vertical and horizontal dimensions, e.g., 16x16 samples or 16 by 16 samples. In general, a 16x16 CU will have 16 samples in a vertical direction (y = 16) and 16 samples in a horizontal direction (x = 16). Likewise, an NxN CU generally has N samples in a vertical direction and N samples in a horizontal direction, where N represents a nonnegative integer value. The samples in a CU may be arranged in rows and columns. Moreover, CUs need not necessarily have the same number of samples in the horizontal direction as in the vertical direction. For example, CUs may comprise NxM samples, where M is not necessarily equal to N.

Video encoder 200 encodes video data for CUs representing prediction and/or residual information, and other information. The prediction information indicates how the CU is to be predicted in order to form a prediction block for the CU. The residual information generally represents sample-by-sample differences between samples of the CU prior to encoding and the prediction block.

To predict a CU, video encoder 200 may generally form a prediction block for the CU through inter-prediction or intra-prediction. Inter-prediction generally refers to predicting the CU from data of a previously coded picture, whereas intra-prediction generally refers to predicting the CU from previously coded data of the same picture. To perform inter-prediction, video encoder 200 may generate the prediction block using one or more motion vectors. Video encoder 200 may generally perform a motion search to identify a reference block that closely matches the CU, e.g., in terms of differences between the CU and the reference block. Video encoder 200 may calculate a difference metric using a sum of absolute difference (SAD), sum of squared differences (SSD), mean absolute difference (MAD), mean squared differences (MSD), or other such difference calculations to determine whether a reference block closely matches the current CU. In some examples, video encoder 200 may predict the current CU using uni-directional prediction or bi-directional prediction.

Some examples of JEM and VVC also provide an affine motion compensation mode, which may be considered an inter-prediction mode. In affine motion compensation mode, video encoder 200 may determine two or more motion vectors that represent non-translational motion, such as zoom in or out, rotation, perspective motion, or other irregular motion types.

To perform intra-prediction, video encoder 200 may select an intra-prediction mode to generate the prediction block. Some examples of JEM and VVC provide sixty-seven intra-prediction modes, including various directional modes, as well as planar mode and DC mode. In general, video encoder 200 selects an intra-prediction mode that describes neighboring samples to a current block (e.g., a block of a CU) from which to predict samples of the current block. Such samples may generally be above, above and to the left, or to the left of the current block in the same picture as the current block, assuming video encoder 200 codes CTUs and CUs in raster scan order (left to right, top to bottom).

Video encoder 200 encodes data representing the prediction mode for a current block. For example, for inter-prediction modes, video encoder 200 may encode data representing which of the various available inter-prediction modes is used, as well as motion information for the corresponding mode. For uni-directional or bi-directional inter-prediction, for example, video encoder 200 may encode motion vectors using advanced motion vector prediction (AMVP) or merge mode. Video encoder 200 may use similar modes to encode motion vectors for affine motion compensation mode.

Following prediction, such as intra-prediction or inter-prediction of a block, video encoder 200 may calculate residual data for the block. The residual data, such as a residual block, represents sample by sample differences between the block and a prediction block for the block, formed using the corresponding prediction mode. Video encoder 200 may apply one or more transforms to the residual block, to produce transformed data in a transform domain instead of the sample domain. For example, video encoder 200 may apply a discrete cosine transform (DCT), an integer transform, a wavelet transform, or a conceptually similar transform to residual video data. Additionally, video encoder 200 may apply a secondary transform following the first transform, such as a mode-dependent non-separable secondary transform (MDNSST), a signal dependent transform, a Karhunen-Loeve transform (KLT), or the like. Video encoder 200 produces transform coefficients following application of the one or more transforms.

As noted above, following any transforms to produce transform coefficients, video encoder 200 may perform quantization of the transform coefficients. Quantization generally refers to a process in which transform coefficients are quantized to possibly reduce the amount of data used to represent the coefficients, providing further compression. By performing the quantization process, video encoder 200 may reduce the bit depth associated with some or all of the coefficients. For example, video encoder 200 may round an n-bit value down to an m-bit value during quantization, where $n$ is greater than $m.$ In some examples, to perform quantization, video encoder 200 may perform a bitwise right-shift of the value to be quantized.

Following quantization, video encoder 200 may scan the transform coefficients, producing a one-dimensional vector from the two-dimensional matrix including the quantized transform coefficients. The scan may be designed to place higher energy (and therefore lower frequency) coefficients at the front of the vector and to place lower energy (and therefore higher frequency) transform coefficients at the back of the vector. In some examples, video encoder 200 may utilize a predefined scan order to scan the quantized transform coefficients to produce a serialized vector, and then entropy encode the quantized transform coefficients of the vector. In other examples, video encoder 200 may perform an adaptive scan. After scanning the quantized transform coefficients to form the one-dimensional vector, video encoder 200 may entropy encode the one-dimensional vector, e.g., according to context-adaptive binary arithmetic coding (CABAC). Video encoder 200 may also entropy encode values for syntax elements describing metadata associated with the encoded video data for use by video decoder 300 in decoding the video data.

To perform CABAC, video encoder 200 may assign a context within a context model to a symbol to be transmitted. The context may relate to, for example, whether neighboring values of the symbol are zero-valued or not. The probability determination may be based on a context assigned to the symbol.

Video encoder 200 may further generate syntax data, such as block-based syntax data, picture-based syntax data, and sequence-based syntax data, to video decoder 300, e.g., in a picture header, a block header, a slice header, or other syntax data, such as a sequence parameter set (SPS), picture parameter set (PPS), or video parameter set (VPS). Video decoder 300 may likewise decode such syntax data to determine how to decode corresponding video data.

In this manner, video encoder 200 may generate a bitstream including encoded video data, e.g., syntax elements describing partitioning of a picture into blocks (e.g., CUs) and prediction and/or residual information for the blocks. Ultimately, video decoder 300 may receive the bitstream and decode the encoded video data.

In general, video decoder 300 performs a reciprocal process to that performed by video encoder 200 to decode the encoded video data of the bitstream. For example, video decoder 300 may decode values for syntax elements of the bitstream using CABAC in a manner substantially similar to, albeit reciprocal to, the CABAC encoding process of video encoder 200. The syntax elements may define partitioning information of a picture into CTUs, and partitioning of each CTU according to a corresponding partition structure, such as a QTBT structure, to define CUs of the CTU. The syntax elements may further define prediction and residual information for blocks (e.g., CUs) of video data.

The residual information may be represented by, for example, quantized transform coefficients. Video decoder 300 may inverse quantize and inverse transform the quantized transform coefficients of a block to reproduce a residual block for the block. Video decoder 300 uses a signaled prediction mode (intra- or inter-prediction) and related prediction information (e.g., motion information for inter-prediction) to form a prediction block for the block. Video decoder 300 may then combine the prediction block and the residual block (on a sample-by-sample basis) to reproduce the original block. Video decoder 300 may perform additional processing, such as performing a deblocking process to reduce visual artifacts along boundaries of the block.

This disclosure may generally refer to "signaling" certain information, such as syntax elements. The term "signaling" may generally refer to the communication of values for syntax elements and/or other data used to decode encoded video data. That is, video encoder 200 may signal values for syntax elements in the bitstream. In general, signaling refers to generating a value in the bitstream. As noted above, source device 102 may transport the bitstream to destination device 116 substantially in real time, or not in real time, such as might occur when storing syntax elements to storage device 112 for later retrieval by destination device 116.

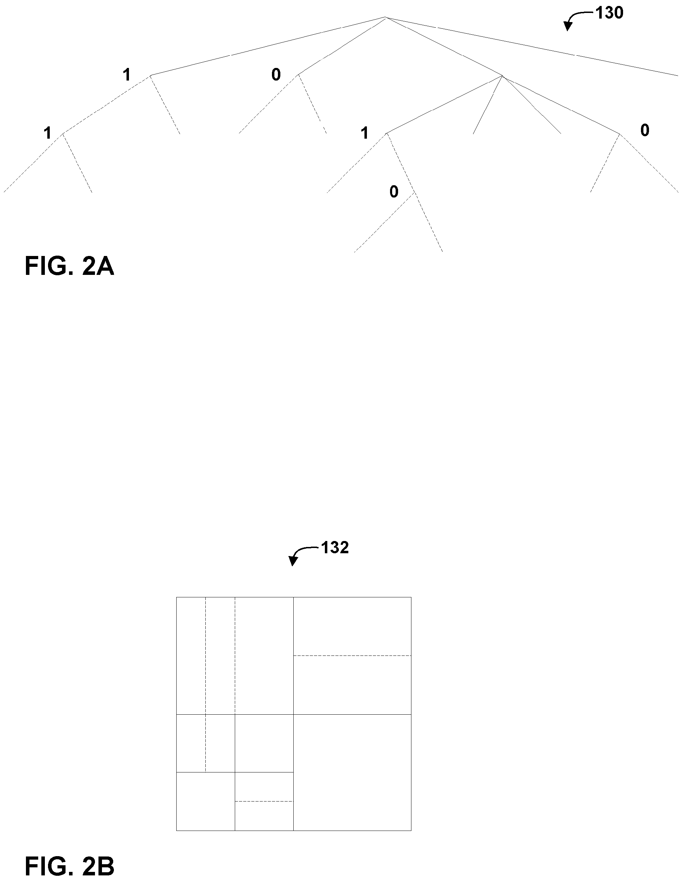

FIGS. 2A and 2B are conceptual diagram illustrating an example quadtree binary tree (QTBT) structure 130, and a corresponding coding tree unit (CTU) 132. The solid lines represent quadtree splitting, and dotted lines indicate binary tree splitting. In each split (i.e., non-leaf) node of the binary tree, one flag is signaled to indicate which splitting type (i.e., horizontal or vertical) is used, where 1 indicates horizontal splitting and 0 indicates vertical splitting in this example. For the quadtree splitting, there is no need to indicate the splitting type, since quadtree nodes split a block horizontally and vertically into 4 sub-blocks with equal size. Accordingly, video encoder 200 may encode, and video decoder 300 may decode, syntax elements (such as splitting information) for a region tree level of QTBT structure 130 (i.e., the solid lines) and syntax elements (such as splitting information) for a prediction tree level of QTBT structure 130 (i.e., the dashed lines). Video encoder 200 may encode, and video decoder 300 may decode, video data, such as prediction and transform data, for CUs represented by terminal leaf nodes of QTBT structure 130.

In general, CTU 132 of FIG. 2B may be associated with parameters defining sizes of blocks corresponding to nodes of QTBT structure 130 at the first and second levels. These parameters may include a CTU size (representing a size of CTU 132 in samples), a minimum quadtree size (MinQTSize, representing a minimum allowed quadtree leaf node size), a maximum binary tree size (MaxBTSize, representing a maximum allowed binary tree root node size), a maximum binary tree depth (MaxBTDepth, representing a maximum allowed binary tree depth), and a minimum binary tree size (MinBTSize, representing the minimum allowed binary tree leaf node size).

The root node of a QTBT structure corresponding to a CTU may have four child nodes at the first level of the QTBT structure, each of which may be partitioned according to quadtree partitioning. That is, nodes of the first level are either leaf nodes (having no child nodes) or have four child nodes. The example of QTBT structure 130 represents such nodes as including the parent node and child nodes having solid lines for branches. If nodes of the first level are not larger than the maximum allowed binary tree root node size (MaxBTSize), then the nodes can be further partitioned by respective binary trees. The binary tree splitting of one node can be iterated until the nodes resulting from the splitting reach the minimum allowed binary tree leaf node size (MinBTSize) or the maximum allowed binary tree depth (MaxBTDepth). The example of QTBT structure 130 represents such nodes as having dashed lines for branches. The binary tree leaf node is referred to as a coding unit (CU), which is used for prediction (e.g., intra-picture or inter-picture prediction) and transform, without any further partitioning. As discussed above, CUs may also be referred to as "video blocks" or "blocks."

In one example of the QTBT partitioning structure, the CTU size is set as 128x128 (luma samples and two corresponding 64x64 chroma samples), the MinQTSize is set as 16x16, the MaxBTSize is set as 64x64, the MinBTSize (for both width and height) is set as 4, and the MaxBTDepth is set as 4. The quadtree partitioning is applied to the CTU first to generate quad-tree leaf nodes. The quadtree leaf nodes may have a size from 16x16 (i.e., the MinQTSize) to 128x128 (i.e., the CTU size). If the leaf quadtree node is 128x128, it will not be further split by the binary tree, since the size exceeds the MaxBTSize (i.e., 64x64, in this example). Otherwise, the leaf quadtree node will be further partitioned by the binary tree. Therefore, the quadtree leaf node is also the root node for the binary tree and has the binary tree depth as 0. When the binary tree depth reaches MaxBTDepth (4, in this example), no further splitting is permitted. When the binary tree node has width equal to MinBTSize (4, in this example), it implies no further vertical splitting is permitted. Similarly, a binary tree node having a height equal to MinBTSize implies no further horizontal splitting is permitted for that binary tree node. As noted above, leaf nodes of the binary tree are referred to as CUs and are further processed according to prediction and transform without further partitioning.

Blocking artifacts may include horizontal and vertical discontinuities in a reconstructed picture that do not exist in an original still picture or picture of video and often result from moderate to high compression. For example, if a video encoder highly compresses an input image, then the visual quality of a decoded image may suffer such that when the image content is decompressed, i.e., decoded, the decompressed image content suffers from blocking artifacts. These artifacts in flat areas look like "tiling" because the artifacts are not masked by highly contrasted content. Furthermore, the blocking artifacts in a playing video may be observed as "moving and flickering" because the discontinuities are located differently in successive frames.

As introduced above, one source of blocking artifacts is the block-based transform coding, including transform and quantization, that is performed on intra and inter prediction errors (e.g., residuals). Coarse quantization of the transform coefficients can cause visually disturbing discontinuities at the block boundaries. Motion compensated prediction is another potential source of blocking artifacts. Motion compensated blocks are generated by copying interpolated pixel data from different locations of possibly different reference frames. As there is almost never a perfect fit for this data (e.g., sample values for reference blocks formed from the interpolation), discontinuities on the boundary of the copied blocks of data typically arise. That is, two neighboring blocks encoded using motion compensation may exhibit discontinuities.

Deblocking filtering (as in HEVC, for example) is usually performed after a picture or group of blocks is reconstructed/decoded to attenuate the blocking artifacts. More specifically, deblocking filtering modifies the values of the samples located near each block boundary, by filtering, clipping, or other means, such that the discontinuity is smoothed and, thus, less visible.

In video compression, deblocking filtering may be performed on images in a display buffer and outside the prediction loop, meaning the deblocking filtered pictures are not used to predict other pictures. Deblocking filtering may also be performed in the prediction loop, meaning the deblocked pictures are used as reference pictures for the motion compensation of future pictures. Both techniques potentially improve subjective quality of the displayed video, while the latter potentially also improves compression efficiency as a result of the accuracy of inter prediction being improved by using deblocked reference frames.

The deblocking in HEVC is an in-loop process and is applied to block boundaries that satisfy two conditions. The first condition is that the boundaries are the boundaries of CUs, PUs, or TUs, and the second condition is that the x-coordinate (or y-coordinate) is (and in some examples, must be) multiples of 8, if the boundary is vertical (or horizontal). The second condition means that the minimum distance of two parallel neighboring boundaries to be deblocked is 8 pixels, which facilitates better parallelization, as described in more detail below. A deblocking filter divides a boundary to be processed, no matter how long the boundary, into multiple non-overlapped 4-sample segments, which are the units on which the deblocking filter performs deblocking filtering. In this disclosure, the deblocking operations on a segment will be introduced, and the segment may be assumed to be vertical, but the processing of horizontal segments is effectively the same.

Video decoder 300, when performing deblocking filtering, may perform a boundary strength determination. For a segment to be processed, the video decoder examines the coding conditions (e.g., the motion vector (MV), reference index, and the presence of non-zero transform coefficients) of two blocks on either side, denoted as P and Q, on either side of a block boundary.

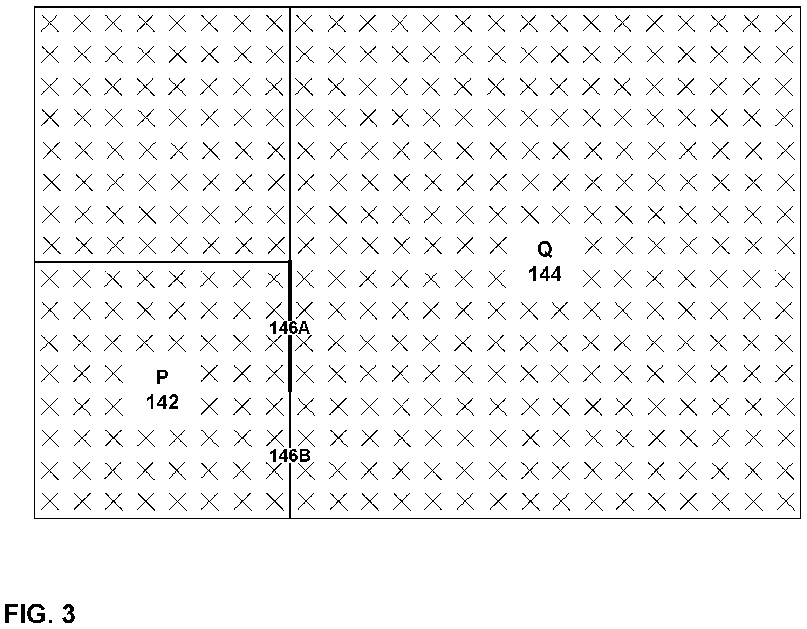

FIG. 3 shows an example of a P block 142 and a Q block 144. P block 142 is an 8x8 block, and Q block 144 is a 16x16 block. P block 142 and Q block 144 share block boundary 146, which is shown in FIG. 3 as segments 146A and 146B. Both segments 146A and 146B are four samples long, in accordance with the deblocking filtering of HEVC, but the techniques of this disclosure are not limited to any particular segment length.

For luma blocks, the video decoder determines the boundary strength, of segment 146A. The boundary strength represents how likely strong blocking artifacts are to appear around segment 146A. In one example, the boundary strength value may be 0, which means that the coding conditions in P block 142 and Q block 144 are such that blocking artifacts are not expected along segment 146A and deblocking filtering for segment 146A may be skipped. In another example, the boundary strength value may be 2, meaning that the coding conditions in P block 142 and Q block 144 are such that severe blocking artifacts are potentially expected to be present and stronger deblocking filtering may be desirable. The boundary strength value may also be 1, meaning that the coding conditions in P block 142 and Q block 144 are such that milder blocking artifacts are potentially expected to be present and some deblocking filtering, but not as strong as the deblocking filtering for when boundary strength equals 2, may be desirable. The details of boundary strength derivation are described in section 8.7.2.4 of HEVC.

The video decoder may determine boundary strengths differently for chroma blocks than for luma blocks. For example, for chroma blocks, the video decoder assigns the segments adjacent to intra coded blocks a boundary strength equal to 2, and otherwise assigns the segments a boundary strength equal to 0.

As described above, the video decoder may estimate the likelihood that a segment has blocking artifacts based on the coding conditions of the adjacent blocks. However, the video decoder may also perform further analysis, based on the values of the samples near that segment, to determine whether and how a segment should be deblocked. First, the video decoder makes a decision of whether to filter the segment by calculating the second derivatives of the four samples near the segment.

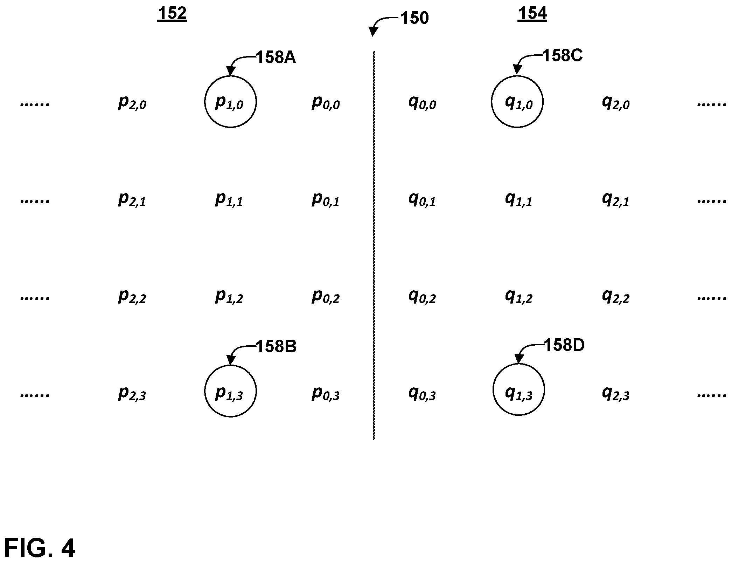

FIG. 4 shows an example of segment 150, which is on the boundary between p block 152 and q block 154. The video decoder calculates the second derivatives of the four samples near the segment, which are shown in FIG. 4 as circled samples 158A-158D. If the summation of the four second derivatives (see Eq. (1)) is smaller than the threshold $\beta$, as described below with respect to the thresholds $\beta$ and tc, then the video decoder determines that the segment needs to be deblocked. Otherwise, the video decoder determines that the segment is considered to be located in a non-flat area, where the blocking artifacts are likely to be masked, and thus do not need to be deblocked. For a segment, even with non-zero boundary strength, the video decoder may skip deblocking filtering if the threshold of Eq. (1) is not reached.

$$|p_{2,0} - 2p_{1,0} + p_{0,0}| + |p_{2,3} - 2p_{1,3} + p_{0,3}| + |q_{2,0} - 2q_{1,0} + q_{0,0}| + |q_{2,3} - 2q_{1,3} + q_{0,3}| < \beta \tag{1}$$

Second, for a segment to be deblocked, the video decoder may make another decision of whether to use a strong or a normal filtering mode. If the following six conditions (Eqs. (2-1) to (2-6)) are all true, which means an area is likely too smooth to mask any blocking artifacts, then the video decoder determines that the strong filtering mode is used. Otherwise, the video decoder determines that the normal filtering mode is used.

$$\left|p_{2,0} - 2p_{1,0} + p_{0,0}\right| + \left|q_{2,0} - 2q_{1,0} + q_{0,0}\right| < \beta/8 \tag{2-1}$$

$$\left|p_{2,3} - 2p_{1,3} + p_{0,3}\right| + \left|q_{2,3} - 2q_{1,3} + q_{0,3}\right| < \beta/8 \tag{2-2}$$

$$\left|p_{3,0} - p_{0,0}\right| + \left|q_{0,0} - q_{3,0}\right| < \beta/8 \tag{2-3}$$

$$\left|p_{3,3} - p_{0,3}\right| + \left|q_{0,3} - q_{3,3}\right| < \beta/8 \tag{2-4}$$

$$\left|p_{0,0} - q_{0,0}\right| < 2.5t_C \tag{2-5}$$

$$\left|p_{0,3} - q_{0,3}\right| < 2.5t_C \tag{2-6}$$

The threshold parameter $t_C$ represents the clipping parameter, which is described in more detail below.

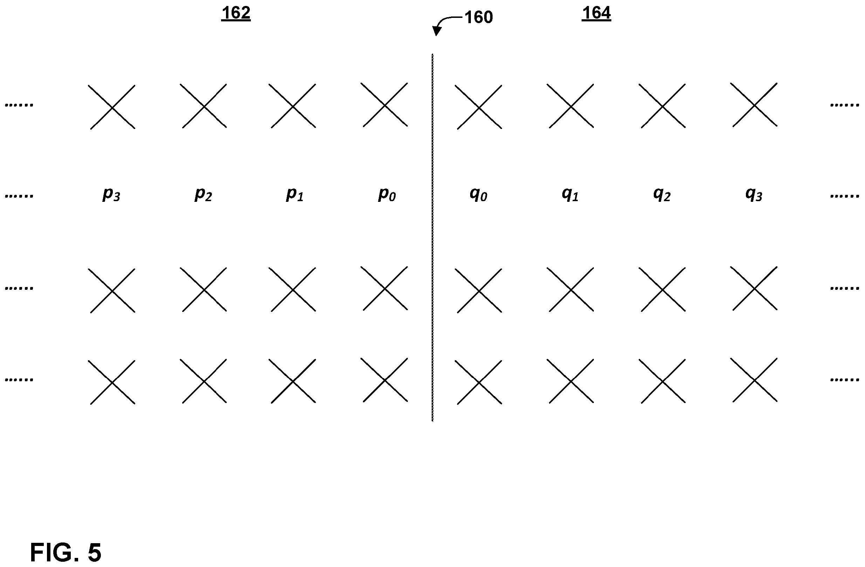

FIG. 5 shows an example of segment 160, which is on the boundary between p block 162 and q block 164. FIG. 5 will be used to show a deblocking filtering operation for one line, represented by physical positions of samples $p_0$, $p_1$, $p_2$, $p_3$, $q_0$, $q_1$, $q_2$, and $q_3$.

For the boundary strength determinations and other decisions for luma described above, the video decoder performs the analysis and derivations at the segment level. In the strong filtering mode for luma and the normal filtering mode for luma, the deblocking filtering is performed line by line (e.g., row by row if the segment is vertical or column by column if the segment is horizontal).

In a strong filtering mode for luma, the video decoder processes three samples on either side of segment 160. In the example of FIG. 5, the sample values for $p_0$, $p_1$, and $p_2$ in P block 162 are updated to $p_0'$, $p_1'$, and $p_2'$, by low-pass filtering, as shown in Eqs. (3-1) to (3-3).

$$p_0' = (p_2 + 2p_1 + 2p_0 + 2q_0 + q_1 + 4) \gg 3 \tag{3-1}$$

$$p_1' = (p_2 + p_1 + p_0 + q_0 + 2) \gg 2 \tag{3-2}$$

$$p_2' = (2p_3 + 3p_2 + p_1 + p_0 + q_0 + 4) \gg 3 \tag{3-3}$$

The modified sample values $p_i'$ (i = 0, 1, 2) are clipped to the range [$p_i$ - 2tc, $p_i$ + 2$t_C$].

The video decoder processes $q_0$, $q_1$, and $q_2$ in Q block 164 using effectively the same equations as Eqs. (3-1) to (3-3), albeit for $q$ instead of $p$. Clipping is applied in the same manner for $q$ as for $p$.

In a normal filtering mode for luma, the video decoder processes, one or two samples on either side of segment 160. For the left side of segment 160, for example, the video decoder checks the condition in Eq. (4-1) is checked. If the condition is true, then the video decoder processes samples $p_0$ and $p_1$. Otherwise, the video decoder only processes sample $p_0$. Similarly, for the right side, the video decoder checks the condition in Eq. (4-2) to determine if sample $q_1$ is processed in addition to sample $q_0$. As the decision on the number of samples to be processed is made independently on either side of the segment, it is possible to process one sample on one side and two on the other side.

$$\left|p_{2,0} - 2p_{1,0} + p_{0,0}\right| + \left|p_{2,3} - 2p_{1,3} + p_{0,3}\right| < 3/16\beta \tag{4-1}$$

$$\left|q_{2,0} - 2q_{1,0} + q_{0,0}\right| + \left|q_{2,3} - 2q_{1,3} + q_{0,3}\right| < 3/16\beta \tag{4-2}$$

To process $p_0$ and $q_0$, an intermediate value $\delta$ is first calculated as in Eq. (5).

$$\delta = (9(q_0 - p_0) - 3(q_1 - p_1) + 8) \gg 4 \tag{5}$$

If the absolute value of δ is greater than or equal to 10 times that of *tc,* then the boundary is considered as a natural edge, which should be preserved, and the video decoder does not perform deblocking filtering on the current line. Otherwise, the video decoder clips δ into the range from - $t_C$ to *tc,* as shown in Eq. (6).

$$\Delta_0 = \text{Clip3}(-t_C, t_C, \delta) \tag{6}$$

The video decoder updates the values of $p_0$ and $q_0$ to $p_0$' and $q_0$', respectively, by adding and subtracting $\Delta_0$, as shown in Eqs. (7-1) and (7-2).

$$p_0' = p_0 + \Delta_0 \tag{7-1}$$

$$q_0' = q_0 - \Delta_0 \tag{7-2}$$

To process the second sample on either side of segment 164, i.e., $p_1$ and $q_1,$ the video decoder uses Eqs. (8-1) and (8-2) to get the updated values $p_1$' and $q_1$'.

$$p_1' = p_1 + \text{Clip3}(-\frac{t_c}{2}, \frac{t_c}{2}, (((p_2 + p_0 + 1) \gg 1) - p_1 + \Delta_0) \gg 1) \tag{8-1}$$

$$q_1' = q_1 + \text{Clip3}(-\frac{t_c}{2}, \frac{t_c}{2}, (((q_2 + q_0 + 1) \gg 1) - q_1 - \Delta_0) \gg 1) \tag{8-2}$$

The video decoder performs deblocking filtering for chroma by determining the boundary strength value, but without performing any sample value analysis. The video decoder only processes the first sample on either side of the segment, i.e., $p_0$ and $q_0,$ by Eqs. (7-1) and (7-2), where the delta $\Delta_0$ is calculated as in Eq. (9).

$$\Delta_0 = \text{Clip3}(-t_C, t_C, (((q_0 - p_0) \ll 2) + p_1 - q_1 + 4) \gg 3) \tag{9}$$

To avoid excessive filtering, the video decoder calculates two parameters β and *tc*. The video decoder uses the threshold β to control the way deblocking is performed, such as whether a segment should be deblocked, whether strong or normal deblocking is used, and/or whether one or two samples on one side of the segment are processed. When β or a scaled β is reached or exceeded (see Eqs. (1), (2), and (4)), meaning greater variation of local sample values, then the deblocking tends to be more conservative, to preserve the details in the original picture. Otherwise, the local sample values have less variation (i.e., smoother), and the video decoder performs the deblocking filtering more aggressively.
The video decoder uses the clipping value $t_C$ mainly to control the maximum change of sample magnitude, except for Eqs. (2-5) and (2-6). In HEVC, for example, in the normal filtering mode or filtering for chroma, the change of sample magnitude is restricted such that the change does not exceed $\pm t_C$ for the first sample on one side of a segment (applicable to luma and chroma), or $\pm t_C/2$ for the second sample (applicable only to luma). In HEVC, for the strong filtering mode, where a greater change in magnitude is implied, the maximum change is restricted to $\pm 2t_C$ for the three samples processed on either side of the segment.
The values of β and $t_C$ mainly depend on the quantization parameter (QP) values from the left block P and right block Q. More specifically, the video decoder may use the average of QPs from P and Q, denoted as $QP_{ave} = (QP_P + QP_Q$ +1)>>1, as the index to search two 1-D look-up tables (LUTs) for β and *tc,* respectively. Although the searching index to find the $t_C$ value may be adjusted by adding two, i.e., ($QP_{ave}$ +2), if boundary strength equals 2, the dominant factor determining the values of β and $t_C$ is still $QP_{ave}$. In both LUTs, the entry values monotonically increase with the value of the search indices, which means the higher the $QP_{ave}$ is, the greater values β and $t_C$ will have. Thus, heavier deblocking filtering is more likely to be selected and greater magnitude change is allowed. Lower QP, on the contrary, leads to smaller or even zero values for β and *tc*. When coded with low a QP, a picture typically has fewer, or less pronounced, blocking artifacts, and therefore needs lighter or even no deblocking.
The indices used to search β and $t_C$ in LUTs, denoted as $idx_\beta$ and $idx_{tc},$ can be further adjusted by two parameters tc_offset_div2 and beta_offset_div2, respectively (see equations (10-1) and (10-2)),

$$idx_\beta = QP_{ave} + 2 \times beta\_offset\_div2 \tag{10-1}$$

$$idx_{tc} = QP_{ave} + 2 \times (BS - 1) + 2 \times tc\_offset\_div2, \qquad (10\text{-}2)$$

where tc_offset_div2 and beta_offset_div2 are sent in a slice header or a picture parameter set (PPS). This gives an encoder the possibility to adapt the deblocking strength depending on the sequence characteristics, the encoding mode, and other factors.

The HEVC deblocking has two sequential stages, which may enable parallelization. In the first stage, the video decoder filters all the vertical block boundaries in a picture, and in the second stage, the video decoder filters all the horizontal block boundaries. In the second stage, the samples used for mode decision and filtering are the outputs of the first stage. In each stage, where boundaries being deblocked are all parallel and at least 8 samples apart, the samples involved in deblocking one boundary do not overlap with the samples involved in deblocking any other boundaries. In this context, the samples involved in deblocking one boundary includes up to three samples to be filtered on either side of the boundary and up to four samples on either side to support the filtering and mode decision, and therefore one boundary can be deblocked in parallel to any other boundaries.

The HEVC deblocking filter filters the samples near a block boundary and clips changes in sample magnitudes that are greater than threshold amounts. The HEVC deblocking filter operates in three modes with three different levels of filter strengths. The three modes, or filter strengths, are referred to herein as strong, normal, and zero (i.e., no filtering), with increasing local activities of the samples near a block boundary (see equations (1) and (2-1) to (2-6)). In the strong filtering mode, the HEVC deblocking filter filters three samples on each side of a block boundary by low pass filtering (see equations (3-1) to (3-3)). For the normal filtering mode, the HEVC deblocking filter filters at least the sample closest to the boundary and, on either side of the boundary, may also filter the second closest sample if the inner samples are smooth enough (see equations (4-1) and (4-2)). The HEVC deblocking filter performs clipping, which is controlled by the parameter *tc.* For strong filtering, the change of sample magnitude is limited to be no greater than *2tc.* For normal filtering, the magnitude changes of the first and second samples are limited to be no greater than $t_C$ and *tc/2,* respectively (see Eqs. (6) - (8-2)). Different boundary strength values only make a difference in *tc,* i.e., the segment with boundary strength equal to 2 has greater $t_C$ than the segment with boundary strength equal to 1.

The HEVC deblocking filter essentially follows the framework of H.264/AVC deblocking and inherits the main features of the H.264/AVC deblocking filter, such as boundary strength determinations based on coding conditions, multi-level filtering strengths from strong down to zero, QP and boundary strength dependent parameters $\beta$ and *tc.* Compared with the H.264/AVC deblocking filter, the new design elements in the HEVC deblocking filter enable easier parallel processing and a better fit into HEVC's larger block-size coding structure, but do not much improve the coding efficiency. Therefore, HEVC deblocking, which was considered a good trade-off between computational complexity and coding efficiency at the time of the finalization of HEVC, may be oversimplified, considering today's highly developed hardware capabilities. The techniques of this disclosure potentially leverage a more hardware computation resources to achieve significant coding efficiency improvement, while still maintaining a parallelization friendly design.

This disclosure proposes techniques that may improve upon aspects of deblocking filtering, including HEVC deblocking filtering. One example of a shortcoming of HEVC deblocking filtering is that using only three levels to represent the smoothness of a boundary area, corresponding to three levels of filtering strength, may be too coarse. Another example of a shortcoming of HEVC deblocking filtering is that only two out of the four lines of a segment are used in deblocking mode decision and filter selection, and in each line, only four samples from either side are used. As the block size of the next generation video codec could be up to 128×128 or even larger, using such a small portion of samples for mode decision may not accurately reflect the real activity of the boundary area and may be sensitive to noise.

Another example of a shortcoming of HEVC deblocking filtering is that the samples to be filtered on either side of a segment can include as many as 3 samples or as few as one sample, which may not be enough samples to provide good results for deblocking a large block. Another example of a shortcoming of HEVC deblocking filtering is that there are, in total, five pre-defined 4-tap or 5-tap filters, pre-assigned to the three samples in strong filtering mode (see equations (3-1) to (3-3)) and two samples in normal filtering mode (see equations (5) to (8-2)), respectively. The limited number of options, short length, and inflexibility in selection of the HEVC deblocking filter may cause lower efficiency in deblocking.

Another example of a shortcoming of HEVC deblocking filtering is that segments with different boundary strengths may have quite different local activities, but share the same deblocking filters, although the clipping value is larger for a boundary strength equal to 2. Another example of a shortcoming of HEVC deblocking filtering is that the HEVC deblocking filter does not differentiate block P and block Q. The filtering strength is determined by the average of the second derivative of P and Q (see equations (1) and (2-1) to (2-2)), and the values of parameters β and $t_C$ depend on the average QP of P and Q. There may be efficiency losses in processing the P block and the Q block in the same way, for coding scenarios where one of the P block or the Q block may be smooth while the other is rich in detail, which is not an uncommon scenario.

This disclosure proposes several techniques to potentially improve performance of the deblocking filtering utilized for video coding or video processing. According to one example, video decoder 300 may be configured to perform filter analysis (e.g., filter selection or filter strength adaptation) based on parameters of block partitioning. In one example, video decoder 300 may be configured to determine the length of the deblocking filter and filter support (e.g., downsampled filter support) based on the length of the block orthogonal to the filtered boundary. In another example, the length of the block aligned with a filtered boundary affects the decision making process, e.g., allows spatial sub-sampling of boundary samples used for filter decision making.

According to another example, video decoder 300 may be configured to adapt the output sample confidence interval, a.k.a. factor Tc, as a function of block partitioning parameters (e.g., sizes) and a related position within a block of the currently processed sample to which the Tc limiting parameter is applied. Tc limits the deviation, either positive or negative, of the deblocked sample value from decoded sample and is input to the deblocking process.

According to another example, video decoder 300 may be configured to use parameters of the processed block (block size) to restrict the sample set available for decision making and filtering process, while preserving the design of the decision making and filtering process. Video decoder 300 may produce samples which are required for the filtering process but not available due to restrictions using a specified process, such as an extrapolation or a padding process. According to another example, video decoder 300 may use transform properties, such as information on transform type/basis function and transform coefficients signalled as non-zero to video decoder 300 and thus present in the reconstructed block of samples, to select deblocking filter parameters, such as filter type, filter length, Tc limiting parameters, spatial sample skip step. According to another example, video decoder 300 may use quantization parameters of the P and Q blocks for setting thresholds on P and Q filter selection independently.

In one example, for a block boundary separating blocks of different sizes, video decoder 300 may make a decision on asymmetric deblocking filtering. For example, when a block boundary separates blocks of a different size, video decoder 300 may select an asymmetric deblocking filter.

In another, if video decoder 300 determines that an asymmetric filter is to be used, then the deblocking process on both sides of the boundary may be different. For instance, the parameters of the deblocking filter, such as tap length, filter coefficient, clipping or a normalization process may be different on both sides of the filtered boundary. Additionally or alternatively, the parameters for decision making processes, such as tap length of analyzing filter, analyzing filter coefficients, clipping, normalization or thresholds may be different on both side of filtered boundary.

In another example, video decoder 300 may determine parameters for asymmetric filtering based on one or more coding mode parameters of blocks on the boundary. Examples of such coding mode parameters include a coding mode, a prediction mode, a slice type, or other such parameters.

Non-limiting examples of implementations of the techniques introduced above will now be described. In one example, the process of the filter analysis (filter selection or filter strength adaptation) is extended to include parameters of block partitioning. For example, video decoder 300 may be configured to determine the length of the deblocking filter and filter support (e.g. downsampled filter support) based on a length of the block orthogonal to the filtered boundary affects. In another example, video decoder 300 may be configured to make decisions based on a length of the block aligned with the filtered boundary, such as allowing spatial sub-sampling of boundary samples used for filter decision making.

The pseudocode below provides an example implementation of the deblocking parameters derivation performed by video decoder 300:

VERT_SAMPLE_SKIP is a variable defining the spatial resampling parameters (a number of skipped samples) specifying a number of samples used for classification of the boundary samples.
DB_BLOCK_SIZE_CLASSIFIER is a variable defining a number of samples used for classification of the boundary samples.
Function isSmoothAsymArea(const CodingUnit& cu, const DeblockEdgeDir edgeDir, const Position& localPos)

```
if (edgeDir == EDGE_VER)
{
    blkWidthQ = std::min((SizeType)LARGE_BLOCK_SIZE_CLASSIFIER,
blkSizeQ.width >> 1);
    blkHeightQ = blkSizeQ.height;
    blkWidthP = std::min((SizeType)LARGE_BLOCK_SIZE_CLASSIFIER,
blkSizeP.width >> 1);
    blkHeightP = blkSizeP.height;
    piSrcP = piSrcQ - blkWidthP;
}
else // (edgeDir == EDGE_HOR)
{
    blkWidthQ = blkSizeQ.width;
    blkHeightQ = std::min((SizeType) DB_BLOCK_SIZE_CLASSIFIER,
blkSizeQ.height >> 1);
    blkWidthP = blkSizeP.width;
    blkHeightP = std::min((SizeType) DB_BLOCK_SIZE_CLASSIFIER,
blkSizeP.height >> 1);
    piSrcP = piSrcQ - blkHeightP * iStride;
}
if (edgeDir == EDGE_VER)
{
    Int i;
    i = localPos.y - cuPosLuma.y;
    // compute local variance in horizontal direction
    for (Int j = 1; j < (blkWidthQ - 1); j+=VERT_SAMPLE_SKIP)
    {
        Int loc = i * iStride + j;
        varQ += abs(piSrcQ[loc - 1] + piSrcQ[loc + 1] - (piSrcQ[loc] << 1));
```

```
        loc = (i + 3) * iStride + j;
        varQ += abs(piSrcQ[loc - 1] + piSrcQ[loc + 1] - (piSrcQ[loc] << 1));
          }
        }
      else if (edgeDir == EDGE_HOR)
        {
        Int j;
        j = localPos.x - cuPosLuma.x;
      // compute local variance in vertical direction
        for (Int i = 1; i < (blkHeightQ - 1); i+=HOR_SAMPLE_SKIP)
        {
        Int loc = i * iStride + j;
        varQ += abs(piSrcQ[loc - iStride] + piSrcQ[loc + iStride] - (piSrcQ[loc] <<
1));
        loc = i * iStride + (j + 3);
        varQ += abs(piSrcQ[loc - iStride] + piSrcQ[loc + iStride] - (piSrcQ[loc] <<
1));
          }
        }
```

In the examples above, pSrcP may, for instance, represent the pointer to the block at one side of the boundary to be deblock filtered, and pSrcQ may represent the pointer to the block at the other side of the boundary to be deblock filtered.

Video decoder 300 may be configured to determine an output sample confidence interval, a.k.a. factor Tc, for limiting deviation of the deblocked sample value from the decoded sample. Tc may be input to the deblocking process. Video decoder 300 may be configured to adapt Tc as a function of block partitioning parameters, such as block size, and a related position within a block or within a filtered boundary of the currently processed sample to which Tc limiting parameter is being applied. In one example, the related position of the currently processed sample is a location of the currently processed sample relative to the filtered boundary.

In one example implementation, the Tc limiting parameter can be defined as a function of related position of the currently filtered line/column within a filtered boundary, where i is an index of currently processed line/column of the filtered boundary, starting from the top/right location of the boundary, respectively.

The pseudocode below provides an example implementation of the Tc application:

```
for( int i = 0; i < boundaryLength; i++ )
{
 for( int j = 0; j < deblockedSamplesOverBoundary; j++ )
 {
     delta  = deblockingFilterResult[i][j] - deblockingFilterInpt[i][j];
     delta1 = Clip3(-Tc[i], Tc[i],  delta  );
 }
}
```

In some examples, Tc value can be defined for a block as a function of position related to top-left position of the currently processed block:

y = coordinateCurrentlyProcessedSample.y - coordinateTopLeftSampleOfBlock.y;
x = coordinateCurrentlyProcessedSample.x - coordinateTopLeftSampleOfBlock.x;

$$delta1 = Clip3( -tc2[y][x], tc2[y][x], delta[y][x] );$$

Video decoder 300 may be configured to use parameters of the processed block, such as block size, to restrict a sample set available for decision making and filtering process, with preservation of the design of the decision making and filtering process. Vide decoder 300 may produce samples which are required for the filtering process but not available due to restrictions using a specified process, such as an extrapolation or a padding process.

The pseudocode below provides an example implementation. In some implementations, a group of filters for boundary processing may be defined. Selection of the filter can be based on the combination of block sizes adjoined at the block boundary and result of classification of the boundary samples.

DB_FILTER_BLOCK_SIZE1, DB_FILTER_BLOCK_SIZE2 and DB_FILTER_BLOCK_SIZE3 are variables each defining a number of samples used for filtering of the boundary samples, defining filter support of 3 filters as an example.

```
          if (edgeDir == EDGE_VER)
          {
            minTUSize = std::min(blkSizeP.width, blkSizeQ.width);
          }
          else
          {
            minTUSize = std::min(blkSizeP.height, blkSizeQ.height);
          }


          if (minTUSize >= DB_FILTER_BLOCK_SIZE1 )
          {
            if (isFilterApplicable (cu, edgeDir, localPos))
            {
      // Apply symmetrical filter 1 on P and Q samples
                apply_filter1(cu, edgeDir, localPos));
            }
          }
          else if ((MODE_INTRA != cuP.predMode) && (MODE_INTRA !=
cuQ.predMode))
          {
            if (edgeDir == EDGE_VER)
            {
              if (
                ( (blkSizeP.width >= DB_FILTER_BLOCK_SIZE1) &&
(blkSizeQ.width >= 8) )
                ||
                ( (blkSizeQ.width >= DB_FILTER_BLOCK_SIZE1) &&
(blkSizeP.width >= 8) )
                )
              {
              if (isFilterApplicable (cu, edgeDir, localPos))
              {
      // Apply asymmetric filtering
                if (blkSizeP.width >= DB_FILTER_BLOCK_SIZE1)
```

```
            {
                    apply_filter2_onP(cu, edgeDir, localPos));
                    apply_filter3_onQ(cu, edgeDir, localPos));
            }
        }
      }
    }
    else
    {
      if (
        ( (blkSizeP.height >= DB_FILTER_BLOCK_SIZE1) &&
(blkSizeQ.height >= 8) )
        ||
        ( (blkSizeQ.height >= DB_FILTER_BLOCK_SIZE1) &&
(blkSizeP.height >= 8))
        )
      {
      if (isFilterApplicable (cu, edgeDir, localPos))
      {
      // Apply asymmetric filtering
        if (blkSizeP.width >= DB_FILTER_BLOCK_SIZE1)
        {
                    apply_filter2_onP(cu, edgeDir, localPos));
                    apply_filter3_onQ(cu, edgeDir, localPos));
        }
      }
       }
      }
    }
```

Video decoder 300 may be configured to use transform properties, such as information on transform type/basis function, and transform coefficients signalled as non-zero to video decoder 300, and thus present in the reconstructed block of samples, to select deblocking filter parameters, such as filter type, filter length, Tc limiting parameters, and/or spatial sample skip step.

The pseudocode below provides an example implementation. Assume that video encoder 200 and video decoder 300 utilize multiple transform set, e.g. {T1,T2,T3}, with video encoder 200 selecting an optimal transform applicable to horizontal and vertical directions. At video decoder 300, the transform applicability to horizontal/vertical direction can be derived from the syntax elements of bitstream. A derivation process utilized in WD of VVC (Draft 2) is specified below,

Table 1 - Transform and signaling mapping table

| MTS_CU_flag | MTS_Hor_flag | MTS_Ver_flag | Intra | | Inter | |
|---|---|---|---|---|---|---|
| | | | Horizontal | Vertical | Horizontal | Vertical |
| 0 | | | DCT2 | | | |
| 1 | 0 | 0 | DST7 | DST7 | DCT8 | DCT8 |
| | 0 | 1 | DCT8 | DST7 | DST7 | DCT8 |
| | 1 | 0 | DST7 | DCT8 | DCT8 | DST7 |
| | 1 | 1 | DCT8 | DCT8 | DST7 | DST7 |

The following pseudocode can be utilized for deblocking filter parameters derivation:

```
if (MTS_CU_flag == 0)
    {
        ApplyDeblockingProcessType1();
    }else
    {
        Int TransformSetId = (MTS_Hor_flag << 1) + MTS_Ver_flag;
switch( TransformSetId )
{
        case 0:     ApplyDeblockingProcessType2(); break;
        case 1:     ApplyDeblockingProcessType3(); break;
        case 2:     ApplyDeblockingProcessType4(); break;
        case 3:     ApplyDeblockingProcessType5(); break;
    }


    }
```

Below is example of function ApplyDeblockingProcessType1. The design of other functions, e.g., deblocking functions, may also follow a similar pattern. function ApplyDeblockingProcessType1()
{

1. Derive length of the classifier based on block size, orthogonal to the blocking boundary, type of the transform and index of non-zero coded transform coefficients, and local activity estimate.
2. Derive length of the deblocking based on block size, orthogonal to the blocking boundary, type of the transform and index of non-zero coded transform coefficients, and local activity estimate.
3. Derive samples skipped during the classifier or deblocking process based on block size, orthogonal to the blocking boundary, type of the transform and index of non-zero coded transform coefficients, and local activity estimate.
4. Derive parameters of deblocking, such as Tc, local thresholds, QP adjustment based on block size, orthogonal to the blocking boundary, type of the transform and index of non-zero coded transform coefficients, and local activity estimate.

Video decoder 300 may be configured to use the quantization parameters of the P and Q blocks to set thresholds on P and Q filter selection independently.

$$iQPp = cuP.qp;$$

$$iQPq = cuQ.qp;$$

The following pseudocode is given for P block parameters. The processing for a Q block may be similar.

$$const\ int\ iIndexTCp = Clip3(0, MAX\_QP +$$

$$DEFAULT\_INTRA\_TC\_OFFSET, Int(iQPp + DEFAULT\_INTRA\_TC\_OFFSET *$$

$$(uiBs\_loc - 1) + (tcOffsetDiv2 << 1)));$$

$$const\ int\ iIndexBp\ = Clip3(0, MAX\_QP, iQP + (betaOffsetDiv2 << 1));$$

$$const\ int\ iTcp\ \ \ = sm\_tcTable\ [iIndexTC] * iBitdepthScale;$$

$$const\ int\ iBetap\ \ = sm\_betaTable[iIndexB\ ] * iBitdepthScale;$$

$$const\ int\ iSideThresholdp = (\ iBeta + (\ iBeta >> 1\ )\ ) >> 3;$$

$$const\ int\ iThrCutp\ \ = iTc * 10;$$

In yet another example, the following implementation of position dependent deblocking may be used in combination with other features herein.

Let numberQSide and numberPSide be lengths of the filters applied to the current line. As introduced above, filter length numberPSide and numberQSide may be based on block size. In this example, two filters are deployed which are applied to filter 7 and 3 pixels of the block boundary. The parameters of a position dependent clipping value are expressed through tables Tc7 and Tc3.

```
const char Tc7[7] = { 6, 5, 4, 3, 2, 1, 1};

const char Tc3[3] = { 6, 4, 2 };

const char *pTcP = (numberPSide == 3) ? Tc3 : Tc7;

const char *pTcQ = (numberQSide == 3) ? Tc3 : Tc7;


for (int thePos = 0; thePos < numberPSide; thePos++)

{

  src = piSrcP[-iOffset*thePos];

  int cvalue = (tc * pTcP[thePos]) >>1;

  piSrcP[-iOffset * thePos] = Clip3(src - cvalue, src + cvalue, ((refMiddle*dbCoeffsP[thePos] + refP * (64 - dbCoeffsP[thePos]) + 32) >> 6));

}

for (int thePos = 0; thePos < numberQSide; thePos++)

{

  src = piSrcQ[iOffset*thePos];

  int cvalue = (tc * pTcQ[thePos]) >> 1;

  piSrcQ[iOffset*thePos] = Clip3(src - cvalue, src + cvalue,

((refMiddle*dbCoeffsQ[thePos] + refQ * (64 - dbCoeffsQ[thePos]) + 32) >> 6));

}
```

In the example above, "Src=piSrcP[-iOffSet*thePos]" illustrates the sample value before deblock filtering. "((refMiddle*dbCoeffsP[thePos] + refP * (64 - dbCoeffsP[thePos]) + 32) >> 6)" illustrates applying the deblock filtering operation. "refP" or "refQ" represents the value of linear combinations of samples at one side (block P or Q side) of the block boundary, or filtered value at one side (block P or Q side) of the block boundary. "refMiddle" represents the value of linear combinations of samples at both sides of the block boundary, or filtered value at both sides of the block boundary. "Clip3(src - cvalue, src + cvalue, ((refMiddle*dbCoeffsP[thePos] + refP * (64 - dbCoeffsP[thePos]) + 32) >> 6))" illustrates clipping the deblock filtered value within the range of src-value and src+cvalue, which is the sample value before being filtered plus/minus the threshold cvalue, where cvalue is adaptive based on the location of the sample and block size.

As discussed above, video decoder 300 may determine numberQSide and numberPSide based on the size of the block having deblock filtering applied. refMiddle represents the value after applying filter to the samples at each side of the boundary of block P and Q. refP and refQ represent the values after applying filters to the samples in block P and block Q.

In yet another example, the following implementation of position dependent deblocking may be used in combination with other features herein.

Let numberQSide and numberPSide be length of the filter applied to the current line. In this example, two filters are deployed which are applied to filter 7 and 3 pixels of the block boundary. The parameters of the position dependent clipping value are expressed through tables Tc7 and Tc3.

```
const char Tc7[4] = { 3, 2, 1, 1 };
const char Tc3[3] = { 3, 2, 1 };


const char *pTcP = (numberPSide == 3) ? Tc3 : Tc7;
const char *pTcQ = (numberQSide == 3) ? Tc3 : Tc7;
char nSP = (numberPSide == 3) ? 0: 1;
char nSQ = (numberQSide == 3) ? 0: 1;



for (int thePos = 0; thePos < numberPSide; thePos++)
{
  src = piSrcP[-iOffset*thePos];
  int cvalue = tc * pTcP[thePos >> nSP];
  piSrcP[-iOffset * thePos] = Clip3(src - cvalue, src + cvalue,
((refMiddle*dbCoeffsP[thePos] + refP * (64 - dbCoeffsP[thePos]) + 32) >> 6));
}
for (int thePos = 0; thePos < numberQSide; thePos++)

{
  src = piSrcQ[iOffset*thePos];
  int cvalue = tc * pTcQ[thePos >> nSQ];
  piSrcQ[iOffset*thePos] = Clip3(src - cvalue, src + cvalue,
((refMiddle*dbCoeffsQ[thePos] + refQ * (64 - dbCoeffsQ[thePos]) + 32) >> 6));
}
```

In the example above, "Src=piSrcP[-iOffSet*thePos]" illustrates the sample value before deblock filtering. "((refMiddle*dbCoeffsP[thePos] + refP * (64 - dbCoeffsP[thePos]) + 32) >> 6)" illustrates applying the deblock filtering operation. "refP" and "refMiddle" are examples of linear combinations of samples at one side of the block boundary, or filtered pixels at one side of the block boundary. "Clip3(src - cvalue, src + cvalue, ((refMiddle*dbCoeffsP[thePos] + refP * (64 - dbCoeffsP[thePos]) + 32) >> 6))" illustrates clipping the deblock filtered value within the range of src-value and src+cvalue, which is the sample value before being filtered plus the threshold cvalue, where cvalue is adaptive based on the location of the sample and block size.

As discussed above, video decoder 300 may determine numberQSide and numberPSide based on the size of the block having deblock filtering applied. refMiddle represents the value after applying filter to the samples at each side of the boundary of block P and Q. refP and refQ represent the values after applying filters to the samples in block P and block Q.

In yet another example, the following implementation of position dependent deblocking may be used in combination with other features herein.

Let numberQSide and numberPSide be lengths of the filters applied to the current line. In this example, two filters are deployed which are applied to filter 7 and 3 pixels of the block boundary. The parameters of a position dependent clipping value are expressed through tables Tc7 and Tc3.

const char Tc7[4] = { 3, 2, 1, 1 };

const char Tc3[3] = { 3, 2, 1 };

const Pel m4 = piSrc[0];

const Pel m3 = piSrc[-iOffset];

const Pel m5 = piSrc[iOffset];

const Pel m2 = piSrc[-iOffset * 2];

const Pel m6 = piSrc[iOffset * 2];

const Pel m1 = piSrc[-iOffset * 3];

const Pel m7 = piSrc[iOffset * 3];

const Pel m0 = piSrc[-iOffset * 4];

piSrc[-iOffset] = Clip3(m3 - Tc3[0] * tc, m3 + Tc3[0] * tc, ((m1 + 2 * m2 + 2 * m3 + 2 * m4 + m5 + 4) >> 3));

piSrc[0] = Clip3(m4 - Tc3[0] * tc, m4 + Tc3[0] * tc, ((m2 + 2 * m3 + 2 * m4 + 2 * m5 + m6 + 4) >> 3));

piSrc[-iOffset * 2] = Clip3(m2 - Tc3[1] * tc, m2 + Tc3[1] * tc, ((m1 + m2 + m3 + m4 + 2) >> 2));

piSrc[iOffset] = Clip3(m5 - Tc3[1] * tc, m5 + Tc3[1] * tc, ((m3 + m4 + m5 + m6 + 2) >> 2));

piSrc[-iOffset * 3] = Clip3(m1 - Tc3[2] * tc, m1 + Tc3[2] * tc, ((2 * m0 + 3 * m1 + m2 + m3 + m4 + 4) >> 3));

piSrc[iOffset * 2] = Clip3(m6 - Tc3[2] * tc, m6 + Tc3[2] * tc, ((m3 + m4 + m5 + 3 * m6 + 2 * m7 + 4»> 3));

In yet another example, the following determination condition of asymmetric filtering may be used in combination with other features disclosed herein.

- Disable long filter in asymmetric case depending on P or Q prediction modes.

```
                bool bSidePisLarge = (edgeDir == EDGE_VER &&
cuP.block(COMPONENT_Y).width >=
SHARP_LARGE_BLOCKS_SIZE_LOWEST_TH)
                || (edgeDir == EDGE_HOR && cuP.block(COMPONENT_Y).height >=
SHARP_LARGE_BLOCKS_SIZE_LOWEST_TH);
                bool bSideQisLarge = (edgeDir == EDGE_VER &&
cuQ.block(COMPONENT_Y).width >=
SHARP_LARGE_BLOCKS_SIZE_LOWEST_TH)
                || (edgeDir == EDGE_HOR && cuQ.block(COMPONENT_Y).height >=
SHARP_LARGE_BLOCKS_SIZE_LOWEST_TH);
                bool asymmFlag = !(bSidePisLarge && bSideQisLarge);


        if (asymmFlag)

                if ((MODE_INTRA == cuP.predMode) || (MODE_INTRA ==
cuQ.predMode))
                {
                bSidePisLarge = 0;
                bSideQisLarge = 0;
                }


        If (bSidePisLarge)
                ApplyLongFilterP();
        else
                ApplyShortFilterP();


        If (bSideQisLarge)
                ApplyLongFilterQ();
        else
                ApplyShortFilterQ();
```

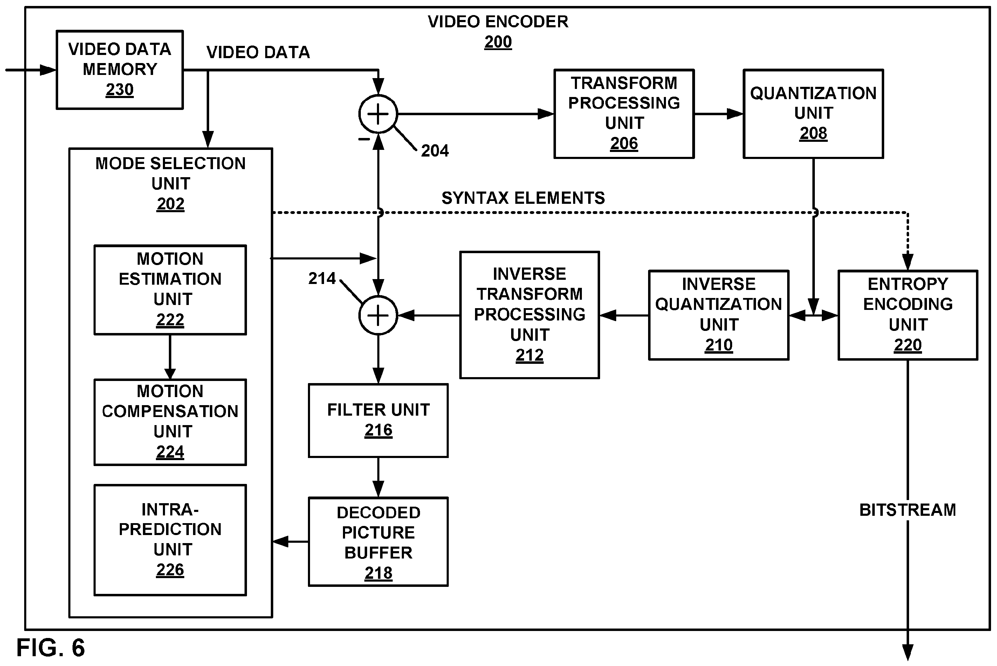

FIG. 6 is a block diagram illustrating an example video encoder 200 that may perform the techniques of this disclosure. FIG. 6 is provided for purposes of explanation and should not be considered limiting of the techniques as broadly exemplified and described in this disclosure. For purposes of explanation, this disclosure describes video encoder 200 in the context of video coding standards such as the HEVC video coding standard and the H.266 video coding standard in development. However, the techniques of this disclosure are not limited to these video coding standards and are applicable generally to video encoding and decoding.

In the example of FIG. 6, video encoder 200 includes video data memory 230, mode selection unit 202, residual generation unit 204, transform processing unit 206, quantization unit 208, inverse quantization unit 210, inverse transform processing unit 212, reconstruction unit 214, filter unit 216, decoded picture buffer (DPB) 218, and entropy encoding unit 220.

Video data memory 230 may store video data to be encoded by the components of video encoder 200. Video encoder 200 may receive the video data stored in video data memory 230 from, for example, video source 104 (FIG. 1). DPB 218 may act as a reference picture memory that stores reference video data for use in prediction of subsequent video data by video encoder 200. Video data memory 230 and DPB 218 may be formed by any of a variety of memory devices, such as dynamic random access memory (DRAM), including synchronous DRAM (SDRAM), magnetoresistive RAM (MRAM), resistive RAM (RRAM), or other types of memory devices. Video data memory 230 and DPB 218 may be provided by the same memory device or separate memory devices. In various examples, video data memory 230 may be on-chip with other components of video encoder 200, as illustrated, or off-chip relative to those components.

In this disclosure, reference to video data memory 230 should not be interpreted as being limited to memory internal to video encoder 200, unless specifically described as such, or memory external to video encoder 200, unless specifically described as such. Rather, reference to video data memory 230 should be understood as reference memory that stores video data that video encoder 200 receives for encoding (e.g., video data for a current block that is to be encoded). Memory 106 of FIG. 1 may also provide temporary storage of outputs from the various units of video encoder 200.

The various units of FIG. 6 are illustrated to assist with understanding the operations performed by video encoder 200. The units may be implemented as fixed-function circuits, programmable circuits, or a combination thereof. Fixed-function circuits refer to circuits that provide particular functionality, and are preset on the operations that can be performed. Programmable circuits refer to circuits that can programmed to perform various tasks, and provide flexible functionality in the operations that can be performed. For instance, programmable circuits may execute software or firmware that cause the programmable circuits to operate in the manner defined by instructions of the software or firmware. Fixed-function circuits may execute software instructions (e.g., to receive parameters or output parameters), but the types of operations that the fixed-function circuits perform are generally immutable. In some examples, one or more of the units may be distinct circuit blocks (fixed-function or programmable), and in some examples, one or more of the units may be integrated circuits.

Video encoder 200 may include arithmetic logic units (ALUs), elementary function units (EFUs), digital circuits, analog circuits, and/or programmable cores, formed from programmable circuits. In examples where the operations of video encoder 200 are performed using software executed by the programmable circuits, memory 106 (FIG. 1) may store instructions (e.g., object code) of the software that video encoder 200 receives and executes, or another memory within video encoder 200 (not shown) may store such instructions.

Video data memory 230 is configured to store received video data. Video encoder 200 may retrieve a picture of the video data from video data memory 230 and provide the video data to residual generation unit 204 and mode selection unit 202. Video data in video data memory 230 may be raw video data that is to be encoded.

Mode selection unit 202 includes a motion estimation unit 222, motion compensation unit 224, and an intra-prediction unit 226. Mode selection unit 202 may include additional functional units to perform video prediction in accordance with other prediction modes. As examples, mode selection unit 202 may include a palette unit, an intra-block copy unit (which may be part of motion estimation unit 222 and/or motion compensation unit 224), an affine unit, a linear model (LM) unit, or the like.

Mode selection unit 202 generally coordinates multiple encoding passes to test combinations of encoding parameters and resulting rate-distortion values for such combinations. The encoding parameters may include partitioning of CTUs into CUs, prediction modes for the CUs, transform types for residual data of the CUs, quantization parameters for residual data of the CUs, and so on. Mode selection unit 202 may ultimately select the combination of encoding parameters having rate-distortion values that are better than the other tested combinations.

Video encoder 200 may partition a picture retrieved from video data memory 230 into a series of CTUs, and encapsulate one or more CTUs within a slice. Mode selection unit 202 may partition a CTU of the picture in accordance with a tree structure, such as the QTBT structure or the quad-tree structure of HEVC described above. As described above, video encoder 200 may form one or more CUs from partitioning a CTU according to the tree structure. Such a CU may also be referred to generally as a "video block" or "block."

In general, mode selection unit 202 also controls the components thereof (e.g., motion estimation unit 222, motion compensation unit 224, and intra-prediction unit 226) to generate a prediction block for a current block (e.g., a current CU, or in HEVC, the overlapping portion of a PU and a TU). For inter-prediction of a current block, motion estimation unit 222 may perform a motion search to identify one or more closely matching reference blocks in one or more reference pictures (e.g., one or more previously coded pictures stored in DPB 218). In particular, motion estimation unit 222 may calculate a value representative of how similar a potential reference block is to the current block, e.g., according to sum of absolute difference (SAD), sum of squared differences (SSD), mean absolute difference (MAD), mean squared differences (MSD), or the like. Motion estimation unit 222 may generally perform these calculations using sample-by-sample differences between the current block and the reference block being considered. Motion estimation unit 222 may identify a reference block having a lowest value resulting from these calculations, indicating a reference block that most closely matches the current block.

Motion estimation unit 222 may form one or more motion vectors (MVs) that define the positions of the reference blocks in the reference pictures relative to the position of the current block in a current picture. Motion estimation unit 222 may then provide the motion vectors to motion compensation unit 224. For example, for uni-directional inter-prediction, motion estimation unit 222 may provide a single motion vector, whereas for bi-directional inter-prediction, motion estimation unit 222 may provide two motion vectors. Motion compensation unit 224 may then generate a prediction block using the motion vectors. For example, motion compensation unit 224 may retrieve data of the reference block using the motion vector. As another example, if the motion vector has fractional sample precision, motion compensation unit 224 may interpolate values for the prediction block according to one or more interpolation filters. Moreover, for bi-directional inter-prediction, motion compensation unit 224 may retrieve data for two reference blocks identified by respective motion vectors and combine the retrieved data, e.g., through sample-by-sample averaging or weighted averaging.

As another example, for intra-prediction, or intra-prediction coding, intra-prediction unit 226 may generate the prediction block from samples neighboring the current block. For example, for directional modes, intra-prediction unit 226 may generally mathematically combine values of neighboring samples and populate these calculated values in the defined direction across the current block to produce the prediction block. As another example, for DC mode, intra-prediction unit 226 may calculate an average of the neighboring samples to the current block and generate the prediction block to include this resulting average for each sample of the prediction block.

Mode selection unit 202 provides the prediction block to residual generation unit 204. Residual generation unit 204 receives a raw, uncoded version of the current block from video data memory 230 and the prediction block from mode selection unit 202. Residual generation unit 204 calculates sample-by-sample differences between the current block and the prediction block. The resulting sample-by-sample differences define a residual block for the current block. In some examples, residual generation unit 204 may also determine differences between sample values in the residual block to generate a residual block using residual differential pulse code modulation (RDPCM). In some examples, residual generation unit 204 may be formed using one or more subtractor circuits that perform binary subtraction.

In examples where mode selection unit 202 partitions CUs into PUs, each PU may be associated with a luma prediction unit and corresponding chroma prediction units. Video encoder 200 and video decoder 300 may support PUs having various sizes. As indicated above, the size of a CU may refer to the size of the luma coding block of the CU and the size of a PU may refer to the size of a luma prediction unit of the PU. Assuming that the size of a particular CU is 2Nx2N, video encoder 200 may support PU sizes of 2Nx2N or NxN for intra prediction, and symmetric PU sizes of 2Nx2N, 2NxN, Nx2N, NxN, or similar for inter prediction. Video encoder 20 and video decoder 30 may also support asymmetric partitioning for PU sizes of 2NxnU, 2NxnD, nLx2N, and nRx2N for inter prediction.

In examples where mode selection unit 202 does not further partition a CU into PUs, each CU may be associated with a luma coding block and corresponding chroma coding blocks. As above, the size of a CU may refer to the size of the luma coding block of the CU. The video encoder 200 and video decoder 300 may support CU sizes of 2Nx2N, 2NxN, or Nx2N.

For other video coding techniques such as an intra-block copy mode coding, an affine-mode coding, and linear model (LM) mode coding, as a few examples, mode selection unit 202, via respective units associated with the coding techniques, generates a prediction block for the current block being encoded. In some examples, such as palette mode coding, mode selection unit 202 may not generate a prediction block, and instead generate syntax elements that indicate the manner in which to reconstruct the block based on a selected palette. In such modes, mode selection unit 202 may provide these syntax elements to entropy encoding unit 220 to be encoded.

As described above, residual generation unit 204 receives the video data for the current block and the corresponding prediction block. Residual generation unit 204 then generates a residual block for the current block. To generate the residual block, residual generation unit 204 calculates sample-by-sample differences between the prediction block and the current block.

Transform processing unit 206 applies one or more transforms to the residual block to generate a block of transform coefficients (referred to herein as a "transform coefficient block"). Transform processing unit 206 may apply various transforms to a residual block to form the transform coefficient block. For example, transform processing unit 206 may apply a discrete cosine transform (DCT), a directional transform, a Karhunen-Loeve transform (KLT), or a conceptually similar transform to a residual block. In some examples, transform processing unit 206 may perform multiple transforms to a residual block, e.g., a primary transform and a secondary transform, such as a rotational transform. In some examples, transform processing unit 206 does not apply transforms to a residual block.

Quantization unit 208 may quantize the transform coefficients in a transform coefficient block, to produce a quantized transform coefficient block. Quantization unit 208 may quantize transform coefficients of a transform coefficient block according to a quantization parameter (QP) value associated with the current block. Video encoder 200 (e.g., via mode selection unit 202) may adjust the degree of quantization applied to the transform coefficient blocks associated with the current block by adjusting the QP value associated with the CU. Quantization may introduce loss of information, and thus, quantized transform coefficients may have lower precision than the original transform coefficients produced by transform processing unit 206.

Inverse quantization unit 210 and inverse transform processing unit 212 may apply inverse quantization and inverse transforms to a quantized transform coefficient block, respectively, to reconstruct a residual block from the transform coefficient block. Reconstruction unit 214 may produce a reconstructed block corresponding to the current block (albeit potentially with some degree of distortion) based on the reconstructed residual block and a prediction block generated by mode selection unit 202. For example, reconstruction unit 214 may add samples of the reconstructed residual block to corresponding samples from the prediction block generated by mode selection unit 202 to produce the reconstructed block.

Filter unit 216 may perform one or more filter operations on reconstructed blocks. For example, filter unit 216 may perform deblocking operations to reduce blockiness artifacts along edges of CUs. For instances, filter unit 216 may be configured to compare an amount of modification to a sample caused by deblocking filtering to a clipping value, and in response to the amount of modification to the sample caused by the deblocking filtering being greater than the first clipping value, modify the value by the clipping value instead of the amount of modification to the sample caused by the deblocking filtering. That is, filter unit 216 may be configured to limit the magnitude of the amount of modification to the sample. Operations of filter unit 216 may be skipped, in some examples.

Video encoder 200 stores reconstructed blocks in DPB 218. For instance, in examples where operations of filter unit 216 are not performed, reconstruction unit 214 may store reconstructed blocks to DPB 218. In examples where operations of filter unit 216 are performed, filter unit 216 may store the filtered reconstructed blocks to DPB 218. Motion estimation unit 222 and motion compensation unit 224 may retrieve a reference picture from DPB 218, formed from the reconstructed (and potentially filtered) blocks, to inter-predict blocks of subsequently encoded pictures. In addition, intra-prediction unit 226 may use reconstructed blocks in DPB 218 of a current picture to intra-predict other blocks in the current picture.

In general, entropy encoding unit 220 may entropy encode syntax elements received from other functional components of video encoder 200. For example, entropy encoding unit 220 may entropy encode quantized transform coefficient blocks from quantization unit 208. As another example, entropy encoding unit 220 may entropy encode prediction syntax elements (e.g., motion information for inter-prediction or intra-mode information for intra-prediction) from mode selection unit 202. Entropy encoding unit 220 may perform one or more entropy encoding operations on the syntax elements, which are another example of video data, to generate entropy-encoded data. For example, entropy encoding unit 220 may perform a context-adaptive variable length coding (CAVLC) operation, a CABAC operation, a variable-to-variable (V2V) length coding operation, a syntax-based context-adaptive binary arithmetic coding (SBAC) operation, a Probability Interval Partitioning Entropy (PIPE) coding operation, an Exponential-Golomb encoding operation, or another type of entropy encoding operation on the data. In some examples, entropy encoding unit 220 may operate in bypass mode where syntax elements are not entropy encoded.

Video encoder 200 may output a bitstream that includes the entropy encoded syntax elements needed to reconstruct blocks of a slice or picture. In particular, entropy encoding unit 220 may output the bitstream.

The operations described above are described with respect to a block. Such description should be understood as being operations for a luma coding block and/or chroma coding blocks. As described above, in some examples, the luma coding block and chroma coding blocks are luma and chroma components of a CU. In some examples, the luma coding block and the chroma coding blocks are luma and chroma components of a PU.

In some examples, operations performed with respect to a luma coding block need not be repeated for the chroma coding blocks. As one example, operations to identify a motion vector (MV) and reference picture for a luma coding block need not be repeated for identifying a MV and reference picture for the chroma blocks. Rather, the MV for the luma coding block may be scaled to determine the MV for the chroma blocks, and the reference picture may be the same. As another example, the intra-prediction process may be the same for the luma coding blocks and the chroma coding blocks.

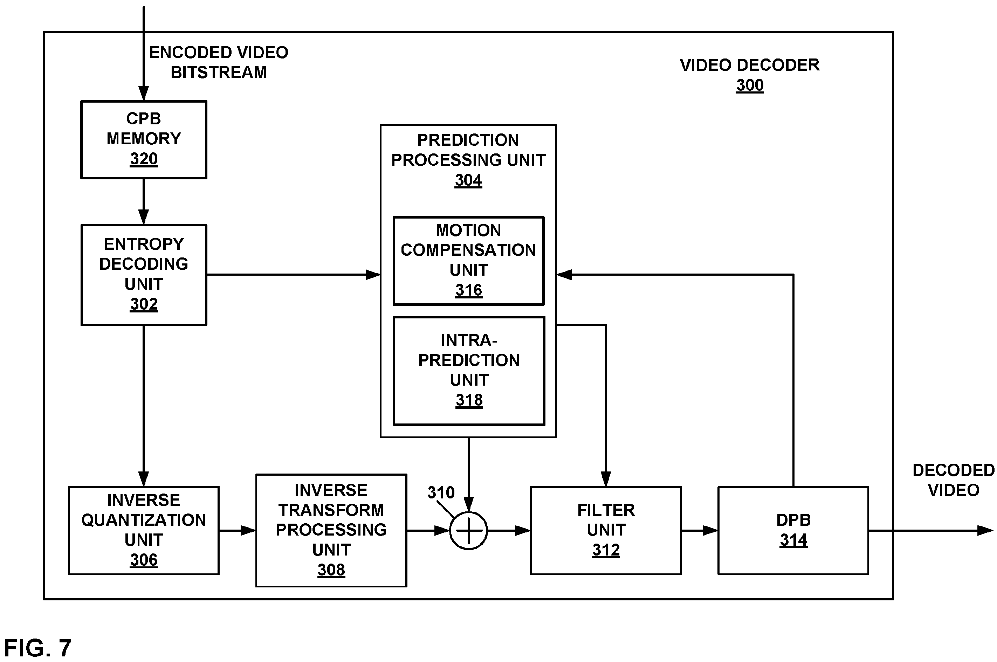

FIG. 7 is a block diagram illustrating an example video decoder 300 that may perform the techniques of this disclosure. FIG. 7 is provided for purposes of explanation and is not limiting on the techniques as broadly exemplified and described in this disclosure. For purposes of explanation, this disclosure describes video decoder 300 is described according to the techniques of JEM and HEVC. However, the techniques of this disclosure may be performed by video coding devices that are configured to other video coding standards.

In the example of FIG. 7, video decoder 300 includes coded picture buffer (CPB) memory 320, entropy decoding unit 302, prediction processing unit 304, inverse quantization unit 306, inverse transform processing unit 308, reconstruction unit 310, filter unit 312, and decoded picture buffer (DPB) 314. Prediction processing unit 304 includes motion compensation unit 316 and intra-prediction unit 318. Prediction processing unit 304 may include additional units to perform prediction in accordance with other prediction modes. As examples, prediction processing unit 304 may include a palette unit, an intra-block copy unit (which may form part of motion compensation unit 316), an affine unit, a linear model (LM) unit, or the like. In other examples, video decoder 300 may include more, fewer, or different functional components.

CPB memory 320 may store video data, such as an encoded video bitstream, to be decoded by the components of video decoder 300. The video data stored in CPB memory 320 may be obtained, for example, from computer-readable medium 110 (FIG. 1). CPB memory 320 may include a CPB that stores encoded video data (e.g., syntax elements) from an encoded video bitstream. Also, CPB memory 320 may store video data other than syntax elements of a coded picture, such as temporary data representing outputs from the various units of video decoder 300. DPB 314 generally stores decoded pictures, which video decoder 300 may output and/or use as reference video data when decoding subsequent data or pictures of the encoded video bitstream. CPB memory 320 and DPB 314 may be formed by any of a variety of memory devices, such as DRAM, including SDRAM, MRAM, RRAM, or other types of memory devices. CPB memory 320 and DPB 314 may be provided by the same memory device or separate memory devices. In various examples, CPB memory 320 may be on-chip with other components of video decoder 300, or off-chip relative to those components.

Additionally or alternatively, in some examples, video decoder 300 may retrieve coded video data from memory 120 (FIG. 1). That is, memory 120 may store data as discussed above with CPB memory 320. Likewise, memory 120 may store instructions to be executed by video decoder 300, when some or all of the functionality of video decoder 300 is implemented in software to be executed by processing circuitry of video decoder 300.

The various units shown in FIG. 7 are illustrated to assist with understanding the operations performed by video decoder 300. The units may be implemented as fixed-function circuits, programmable circuits, or a combination thereof. Similar to FIG. 6, fixed-function circuits refer to circuits that provide particular functionality, and are preset on the operations that can be performed. Programmable circuits refer to circuits that can be programmed to perform various tasks, and provide flexible functionality in the operations that can be performed. For instance, programmable circuits may execute software or firmware that cause the programmable circuits to operate in the manner defined by instructions of the software or firmware. Fixed-function circuits may execute software instructions (e.g., to receive parameters or output parameters), but the types of operations that the fixed-function circuits perform are generally immutable. In some examples, one or more of the units may be distinct circuit blocks (fixed-function or programmable), and in some examples, one or more of the units may be integrated circuits.

Video decoder 300 may include ALUs, EFUs, digital circuits, analog circuits, and/or programmable cores formed from programmable circuits. In examples where the operations of video decoder 300 are performed by software executing on the programmable circuits, on-chip or off-chip memory may store instructions (e.g., object code) of the software that video decoder 300 receives and executes.

Entropy decoding unit 302 may receive encoded video data from the CPB and entropy decode the video data to reproduce syntax elements. Prediction processing unit 304, inverse quantization unit 306, inverse transform processing unit 308, reconstruction unit 310, and filter unit 312 may generate decoded video data based on the syntax elements extracted from the bitstream.

In general, video decoder 300 reconstructs a picture on a block-by-block basis. Video decoder 300 may perform a reconstruction operation on each block individually (where the block currently being reconstructed, i.e., decoded, may be referred to as a "current block").

Entropy decoding unit 302 may entropy decode syntax elements defining quantized transform coefficients of a quantized transform coefficient block, as well as transform information, such as a quantization parameter (QP) and/or transform mode indication(s). Inverse quantization unit 306 may use the QP associated with the quantized transform coefficient block to determine a degree of quantization and, likewise, a degree of inverse quantization for inverse quantization unit 306 to apply. Inverse quantization unit 306 may, for example, perform a bitwise left-shift operation to inverse quantize the quantized transform coefficients. Inverse quantization unit 306 may thereby form a transform coefficient block including transform coefficients.

After inverse quantization unit 306 forms the transform coefficient block, inverse transform processing unit 308 may apply one or more inverse transforms to the transform coefficient block to generate a residual block associated with the current block. For example, inverse transform processing unit 308 may apply an inverse DCT, an inverse integer transform, an inverse Karhunen-Loeve transform (KLT), an inverse rotational transform, an inverse directional transform, or another inverse transform to the transform coefficient block.

Furthermore, prediction processing unit 304 generates a prediction block according to prediction information syntax elements that were entropy decoded by entropy decoding unit 302. For example, if the prediction information syntax elements indicate that the current block is inter-predicted, motion compensation unit 316 may generate the prediction block. In this case, the prediction information syntax elements may indicate a reference picture in DPB 314 from which to retrieve a reference block, as well as a motion vector identifying a location of the reference block in the reference picture relative to the location of the current block in the current picture. Motion compensation unit 316 may generally perform the inter-prediction process in a manner that is substantially similar to that described with respect to motion compensation unit 224 (FIG. 6).

As another example, if the prediction information syntax elements indicate that the current block is intra-predicted, intra-prediction unit 318 may generate the prediction block according to an intra-prediction mode indicated by the prediction information syntax elements. Again, intra-prediction unit 318 may generally perform the intra-prediction process in a manner that is substantially similar to that described with respect to intra-prediction unit 226 (FIG. 6). Intra-prediction unit 318 may retrieve data of neighboring samples to the current block from DPB 314.

Reconstruction unit 310 may reconstruct the current block using the prediction block and the residual block. For example, reconstruction unit 310 may add samples of the residual block to corresponding samples of the prediction block to reconstruct the current block.

Filter unit 312 may perform one or more filter operations on reconstructed blocks. For example, filter unit 312 may perform deblocking operations to reduce blockiness artifacts along edges of the reconstructed blocks. For instances, filter unit 312 may be configured to compare an amount of modification to a sample caused by deblocking filtering to a clipping value, and in response to the amount of modification to the sample caused by the deblocking filtering being greater than the first clipping value, modify the value by the clipping value instead of the amount of modification to the sample caused by the deblocking filtering. That is, filter unit 312 may be configured to limit the magnitude of the amount of modification to the sample. Operations of filter unit 312 are not necessarily performed in all examples.

Video decoder 300 may store the reconstructed blocks in DPB 314. For instance, in examples where operations of filter unit 312 are not needed, reconstruction unit 310 may store reconstructed blocks to DPB 314. In examples where operations of filter unit 312 are needed, filter unit 312 may store the filtered reconstructed blocks to DPB 314. As discussed above, DPB 314 may provide reference information, such as samples of a current picture for intra-prediction and previously decoded pictures for subsequent motion compensation, to prediction processing unit 304. Moreover, video decoder 300 may output decoded pictures (e.g., decoded video) from DPB 314 for subsequent presentation on a display device, such as display device 118 of FIG. 1.

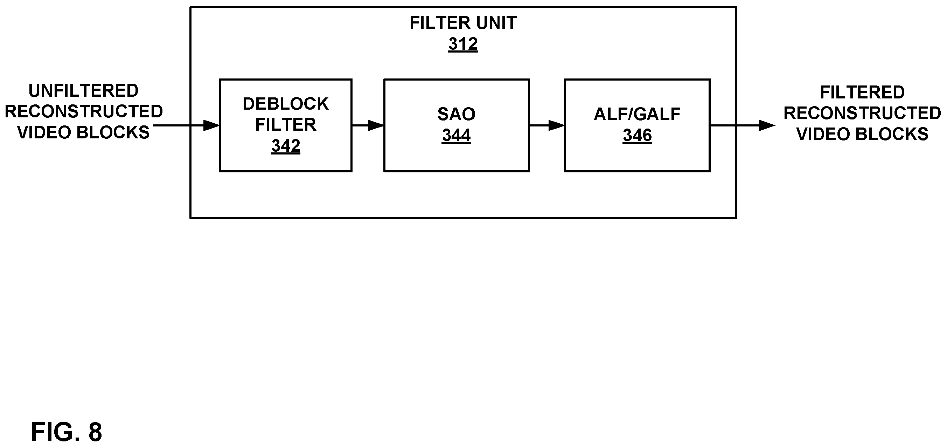

FIG. 8 shows an example implementation of filter unit 312 in FIG. 7. Filter unit 216 in FIG. 6 may be implemented in the same or a similar manner. Filter units 216 and 312 may perform the techniques of this disclosure, possibly in conjunction with other components of video encoder 200 or video decoder 300. In the example of FIG. 8, filter unit 312 includes deblocking filter 342, SAO filter 344, and ALF/GALF filter 346. SAO filter 344 may, for example, be configured to determine offset values for samples of a block. ALF/GALF 346 may likewise filter blocks of video data using adaptive loop filter and/or geometric adaptive loop filtering.

Filter unit 312 may include fewer filters and/or may include additional filters. Additionally, the particular filters shown in FIG. 8 may be implemented in a different order. Other loop filters (either in the coding loop or after the coding loop) may also be used to smooth pixel transitions or otherwise improve the video quality. The filtered reconstructed video blocks output by filter unit 312 may be stored in DPB 314, which stores reference pictures used for subsequent motion compensation. DPB 314 may be part of or separate from additional memory that stores decoded video for later presentation on a display device, such as display device 118 of FIG. 1.

Video decoder 300, e.g., deblocking filter 342 of filter unit 312, may be configured to obtain a first reconstructed block of video data and apply deblocking filtering to the first reconstructed block according to any technique or combination of techniques described in this disclosure. To obtain the first reconstructed block of video data, video decoder 300 may be configured to determine a prediction block of video data add a residual block of video data to the prediction block of video data. To apply the deblocking filtering to the first reconstructed block, video decoder 300 may apply the deblocking filtering to samples located at a border of the first reconstructed block of video data and a second reconstructed block of video data. To apply the deblocking filtering to the first reconstructed block, video decoder 300 determine a filter strength for the deblocking filtering.

To apply the deblocking filtering to the first reconstructed block, video decoder 300 may select a filter for the deblocking filtering. To selecting the filter for the deblocking filtering, video decoder 300 may select the filter based on a length of a block orthogonal to a boundary to be filtered. To select the filter for the deblocking filtering, video decoder 300 select the filter based on a length of a block aligned with a boundary to be filtered. To select the filter for the deblocking filtering, video decoder 300 may select the filter from a plurality of deblocking filters with different lengths. To select the filter for the deblocking filtering, video decoder 300 selects the filter from a plurality of deblocking filters with different filter supports.

Video decoder 300 may be configured to determine a confidence factor and determine a sample modification amount based on the confidence factor. Video decoder 300 may apply the deblocking filtering to the first reconstructed block by modifying a sample of the first reconstructed block by the sample modification amount. Video decoder 300 may determine the sample modification amount based on the confidence factor by limiting the sample modification amount to a range of values. The confidence factor may, for example, be an interval.

Video decoder 300 may be configured to determine a second prediction block of video data; add a second residual block of video data to the second prediction block of video data to determine a second reconstructed block of video data that is adjacent to the first reconstructed block; determine a first quantization parameter for the residual block; determine a second quantization parameter for the second residual block; apply deblocking filtering to the first reconstructed block based on the first quantization parameter; and apply deblocking filtering to the second reconstructed block based on the second quantization parameter.

To apply deblocking filtering to the first reconstructed block based on the first quantization parameter, video decoder 300 may determine a sample modification amount for a sample of the first reconstructed block based on the first quantization parameter, and apply deblocking filtering to the second reconstructed block based on the second quantization parameter by determining a sample modification amount for a sample of the second reconstructed block based on the second quantization parameter. To determine the sample modification amount for the sample of the first reconstructed block based on the first quantization parameter, video decoder 300 may limit the sample modification amount for the sample of the first reconstructed block to a first range of values and determine the sample modification amount for the sample of the second reconstructed block based on the second quantization parameter by limiting the sample modification amount for the sample of the second reconstructed block to a second range of values that is different than the first range of values.

To apply the deblocking filtering to the first reconstructed block, video decoder 300 may select deblocking filter parameters for the deblocking filtering. The deblocking filtering parameters may, for example, include one or more of a filter type, a filter length, limiting parameters, or a spatial sample skip step. To select the deblocking filter parameters for the deblocking filtering, video decoder 300 may select the deblocking filter parameters based on one or both of transform properties or transform coefficients for the residual block.

To apply the deblocking filtering to the first reconstructed block, video decoder 300 may determine values for unavailable samples and apply the deblocking filtering using the determined values. To determine the values for the unavailable samples, video decoder 300 may perform an extrapolation process and/or a padding process. Video decoder 300 may determine the unavailable samples to be unavailable based on a block characteristic of the first reconstructed block.

Video decoder 300, e.g., deblocking filter 342 of filter unit 312, may be configured to obtain a first reconstructed block of video data, wherein the first reconstructed block includes a first sample with a first value; applying deblocking filtering to the first reconstructed block to create a deblocking filtered block; determine a first clipping value for the first sample based on a location of the first sample relative to a boundary of the first reconstructed block and based on a size of the first reconstructed block; compare the first clipping value to an amount of modification to the first sample caused by the deblocking filtering; in response to the amount of modification to the first sample caused by the deblocking filtering being greater than the first clipping value, modify the first value by the first clipping value to determine a first filtered value for the first sample; and output a deblocking filtered block of video data, wherein in the deblocking filtered block, the first sample has the first filtered value.

The first filtered value may be equal to the first value plus the first clipping value or may be equal to the first value minus the first clipping value. Video decoder 300 may determine the first clipping value for the first sample further based on a deblocking filtering mode for the first reconstructed block.

The first reconstructed block may include a second sample with a second value, and video decoder 300 may determine a second clipping value for the second sample based on a location of the second sample relative to the boundary of the first reconstructed block and based on the size of the first reconstructed block and in response to an amount of modification to the second sample caused by the deblocking filtering being less than the second clipping value, modify the second value by the amount of modification to the second sample to determine a second filtered value for the second sample. In such an example, in the deblocking filtered block, the second sample has the second filtered value.

If a distance between the first sample and the boundary of the first reconstructed block is equal to a distance between the second sample and the boundary of the first reconstructed block, then video decoder 300 may set the first clipping value equal to the second clipping value for the second sample. If a distance between the first sample and the boundary of the first reconstructed block is different than a distance between the second sample and the boundary of the first reconstructed block, then then video decoder 300 may set the first clipping value to be different than the second clipping value.

Based on the size of the first reconstructed block, video decoder 300 may determine that the deblocking filter is only applied to samples that are six or fewer samples removed from the boundary of the first reconstructed block. Based on the size of the first reconstructed block, video decoder 300 may determine that the deblocking filter is applied to samples that are two or fewer samples removed from the boundary of the first reconstructed block.

The first clipping value may decrease with distance from the boundary of the first reconstructed block. For example, in response to determining that the deblocking filter is applied to the samples within 6 rows or columns of the boundary of the first reconstructed block and in response to the first sample being adjacent to the boundary of the first reconstructed block, video decoder 300 may determine that the first clipping value is equal to 6. In response to determining that the deblocking filter is applied to the samples within 6 rows or columns of the boundary of the first reconstructed block and in response to the first sample being one sample removed from the boundary of the first reconstructed block, video decoder 300 may determine that the first clipping value is equal to 5. In response to determining that the deblocking filter is applied to the samples within 6 rows or columns of the boundary of the first reconstructed block and in response to the first sample being two samples removed from the boundary of the first reconstructed block, video decoder 300 may determine that the first clipping value is equal to 4.

In response to determining that the deblocking filter is applied to the samples within 6 rows or columns of the boundary of the first reconstructed block and in response to the first sample being three samples removed from the boundary of the first reconstructed block, video decoder 300 may determine that the first clipping value is equal to 3. In response to determining that the deblocking filter is applied to the samples within 6 rows or columns of the boundary of the first reconstructed block and in response to the first sample being four samples removed from the boundary of the first reconstructed block, video decoder 300 may determine that the first clipping value is equal to 2. In response to determining that the deblocking filter is applied to the samples within 6 rows or columns of the boundary of the first reconstructed block and in response to the first sample being five samples removed from the boundary of the first reconstructed block, video decoder 300 may determine that the first clipping value is equal to 1.

In response to determining that the deblocking filter is applied to the samples within 2 rows or columns of the boundary of the first reconstructed block and in response to the first sample being adjacent to the boundary of the first reconstructed block, video decoder 300 may determine that the first clipping value is equal to 6. In response to determining that the deblocking filter is applied to the samples within 2 rows or columns of the boundary of the first reconstructed block and in response to the first sample being one sample removed from the boundary of the first reconstructed block, video decoder 300 may determine that the first clipping value is equal to 4. In response to determining that the deblocking filter is applied to the samples within 2 rows or columns of the boundary of the first reconstructed block and in response to the first sample being two samples removed from the boundary of the first reconstructed block, video decoder 300 may determine that the first clipping value is equal to 2.

Video decoder 300 may also be configured to obtain a second reconstructed block of video data, wherein the second reconstructed block includes a second sample with a second value, wherein the second reconstructed block shares the boundary with the first reconstructed block and wherein the first reconstructed block and the second reconstructed block are different sizes; apply deblocking filtering to the second reconstructed block to determine a second deblocking filtered block; determine a second clipping value for the second sample based on a location of the second sample relative to a boundary of the second reconstructed block and based on a size of the second reconstructed block; in response to an amount of modification to the first sample caused by the deblocking filtering being greater than the second clipping value, modify the first value by the second clipping value to determine a second filtered value for the second sample; and output a second deblocking filtered block of video data, wherein in the second deblocking filtered block, the second sample has the second filtered value. Video decoder 300 may apply deblocking filtering to the first reconstructed block to determine the first deblocking filtered block comprises filtering samples in the first reconstructed block with a first filter of a first length and apply deblocking filtering to the second reconstructed block to determine the second deblocking filtered block comprises filtering samples in the second reconstructed block with a second filter of a second length that is different than the first length.

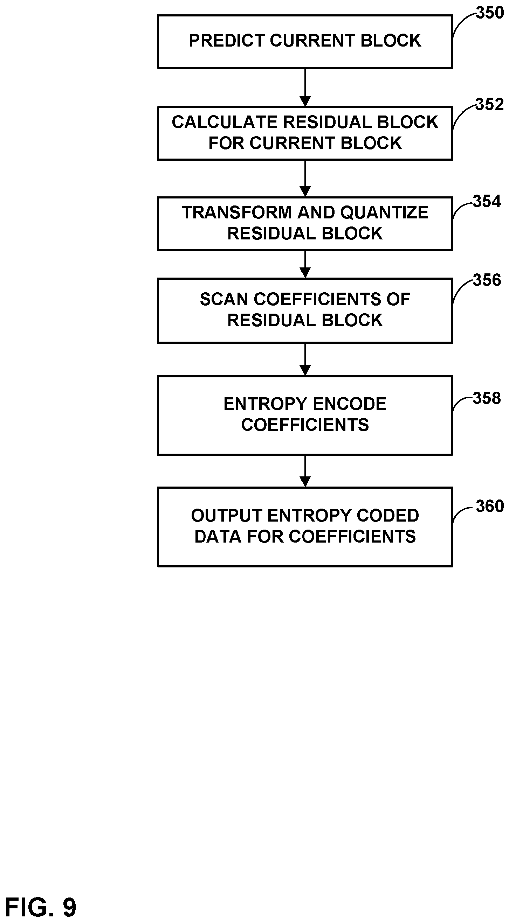

FIG. 9 is a flowchart illustrating an example method for encoding a current block. The current block may include a current CU. Although described with respect to video encoder 200 (FIGS. 1 and 6), it should be understood that other devices may be configured to perform a method similar to that of FIG. 9.

In this example, video encoder 200 initially predicts the current block (350). For example, video encoder 200 may form a prediction block for the current block. Video encoder 200 may then calculate a residual block for the current block (352). To calculate the residual block, video encoder 200 may calculate a difference between the original, uncoded block and the prediction block for the current block. Video encoder 200 may then transform and quantize coefficients of the residual block (354). Next, video encoder 200 may scan the quantized transform coefficients of the residual block

(356). During the scan, or following the scan, video encoder 200 may entropy encode the coefficients (358). For example, video encoder 200 may encode the coefficients using CAVLC or CABAC. Video encoder 200 may then output the entropy coded data for the coefficients of the block (360).

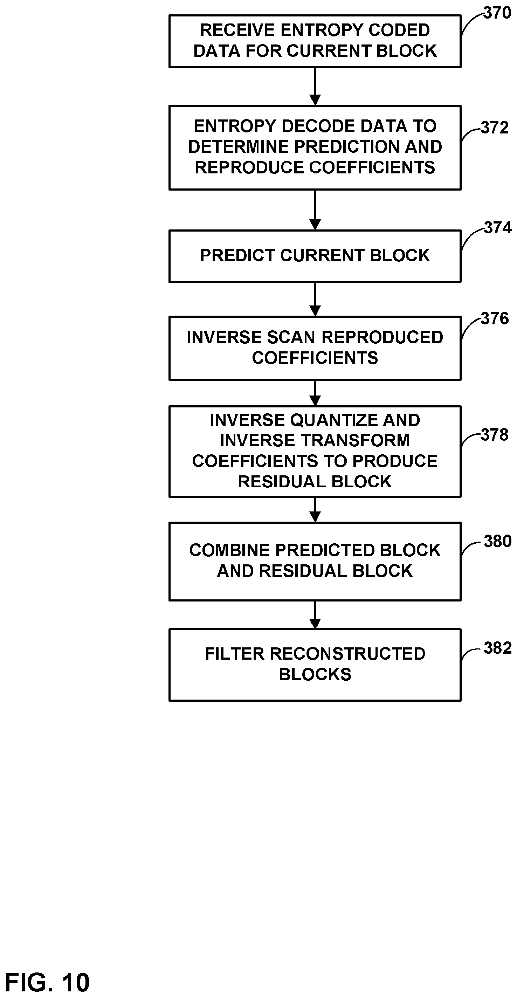

FIG. 10 is a flowchart illustrating an example method for decoding a current block of video data. The current block may include a current CU. Although described with respect to video decoder 300 (FIGS. 1 and 7), it should be understood that other devices may be configured to perform a method similar to that of FIG. 10.

Video decoder 300 may receive entropy coded data for the current block, such as entropy coded prediction information and entropy coded data for coefficients of a residual block corresponding to the current block (370). Video decoder 300 may entropy decode the entropy coded data to determine prediction information for the current block and to reproduce coefficients of the residual block (372). Video decoder 300 may predict the current block (374), e.g., using an intra- or inter-prediction mode as indicated by the prediction information for the current block, to calculate a prediction block for the current block. Video decoder 300 may then inverse scan the reproduced coefficients (376), to create a block of quantized transform coefficients. Video decoder 300 may then inverse quantize and inverse transform the coefficients to produce a residual block (378). Video decoder 300 may ultimately decode the current block by combining the prediction block and the residual block (380). After combining the prediction block and the residual block to generate a reconstructed block, video decoder 300 may apply one or more filters (e.g., deblocking, SAO, and/or ALF/GALF) to the unfiltered reconstructed block to generate a filtered reconstructed block (382).

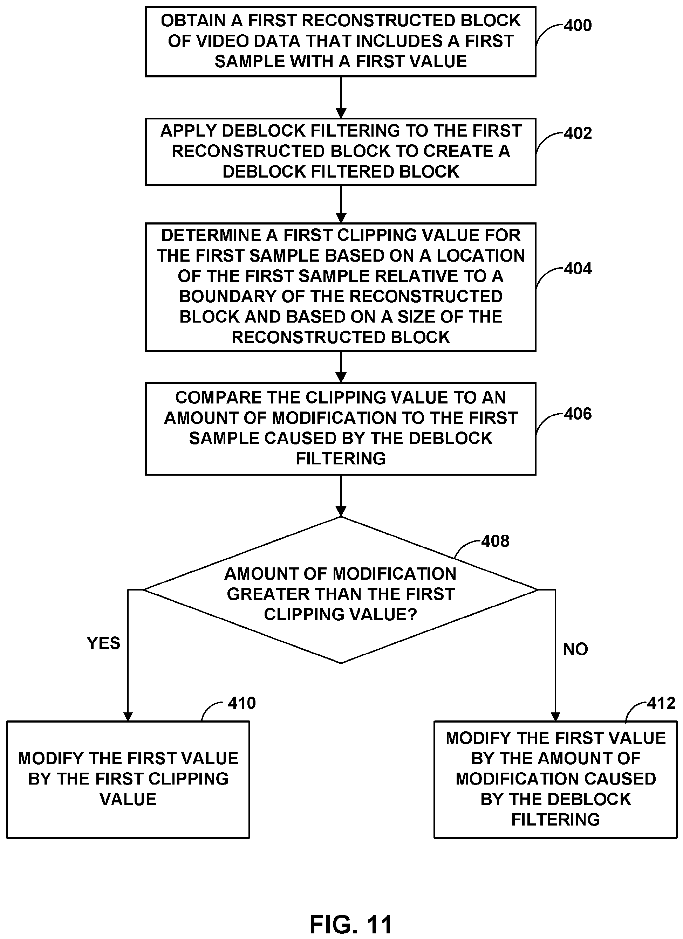

FIG. 11 is a flow diagram illustrating an example video decoding technique described in this disclosure. The techniques of FIG. 11 will be described with reference to a generic video decoder, such as but not limited to video decoder 300. In some instances, the techniques of FIG. 11 may be performed by a video encoder such as video encoder 200, as part of a video encoding process, in which case the generic video decoder corresponds to the decoding loop (e.g., inverse quantization unit 210, inverse transform processing unit 212, reconstruction unit 214, and filter unit 216) of video encoder 200.

In the example of FIG. 11, the video decoder obtains a first reconstructed block of video data that includes a first sample with a first value (400). The video decoder applies deblocking filtering to the first reconstructed block to create a deblocking filtered block (402). The video decoder determines a first clipping value for the first sample based on a location of the first sample relative to a boundary of the first reconstructed block and based on a size of the first reconstructed block (404). The video decoder 300 compares the first clipping value to an amount of modification to the first sample caused by the deblocking filtering (406). In response to the amount of modification to the first sample caused by the deblocking filtering being greater than the first clipping value (408, YES), the video decoder modifies the first value by the first clipping value to determine a first filtered value for the first sample (410). In response to the amount of modification to the first sample caused by the deblocking filtering not being greater than the first clipping value (408, NO), the video decoder modifies the first value by the amount of modification to the first sample caused by the deblocking filtering (412). The video decoder may, for example, keep the first filtered value equal to a filtered value determined by the deblock filtering rather than setting the first filtered value equal to the first value plus or minus the clipping value.

It is to be recognized that depending on the example, certain acts or events of any of the techniques described herein can be performed in a different sequence, may be added, merged, or left out altogether (e.g., not all described acts or events are necessary for the practice of the techniques). Moreover, in certain examples, acts or events may be performed concurrently, e.g., through multi-threaded processing, interrupt processing, or multiple processors, rather than sequentially.

In one or more examples, the functions described may be implemented in hardware, software, firmware, or any combination thereof. If implemented in software, the functions may be stored on or transmitted over as one or more instructions or code on a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can include one or more of RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Instructions may be executed by one or more processors, such as one or more DSPs, general purpose microprocessors, ASICs, FPGAs, or other equivalent integrated or discrete logic circuitry. Accordingly, the term "processor," as used herein may refer to any of the foregoing structure or any other structure suitable for implementation of the techniques described herein. In addition, in some aspects, the functionality described herein may be provided within dedicated hardware and/or software modules configured for encoding and decoding, or incorporated in a combined codec. Also, the techniques could be fully implemented in one or more circuits or logic elements.

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a codec hardware unit or provided by a collection of interoperative hardware units, including one or more processors as described above, in conjunction with suitable software and/or firmware.

Various examples have been described. The invention is set out in **the** following claims.

**Claims**

1.  A method of decoding video data, the method comprising:

    obtaining (400) a first reconstructed block of video data, wherein the first reconstructed block includes a first sample with a first value;
    applying (402) deblocking filtering to the first reconstructed block to create a deblocking filtered block;
    determining (404) a first clipping value for the first sample based on a location of the first sample relative to a boundary of the first reconstructed block and based on a size of the first reconstructed block;
    comparing (406) the first clipping value to an amount of modification to the first sample caused by the deblocking filtering;
    in response to the amount of modification to the first sample caused by the deblocking filtering being greater than the first clipping value, modifying (408) the first value by the first clipping value to determine a first filtered value for the first sample, wherein the determined first filtered value is equal to the first value plus the first clipping value if the modification to the first sample caused by the deblocking filtering is positive or is equal to the first value minus the first clipping value if the modification to the first sample caused by the deblocking filtering is negative; and
    outputting a deblocking filtered block of video data, wherein, in the outputted deblocking filtered block, the first sample is replaced by the first filtered value in response to the amount of modification to the first sample caused by the deblocking filtering being greater than the first clipping value.

2.  The method of claim 1, further comprising:
    determining the first clipping value for the first sample further based on a deblocking filtering mode for the first reconstructed block.

3.  The method of claim 1, wherein the first reconstructed block includes a second sample with a second value, the method further comprising;

    determining a second clipping value for the second sample based on a location of the second sample relative to the boundary of the first reconstructed block and based on the size of the first reconstructed block;
    in response to an amount of modification to the second sample caused by the deblocking filtering being less than the second clipping value, modifying the second value by the amount of modification to the second sample to determine a second filtered value for the second sample; and
    wherein in the deblocking filtered block, the second sample has the second filtered value.

4.  The method of claim 3, wherein either:

    a distance between the first sample and the boundary of the first reconstructed block is equal to a distance between the second sample and the boundary of the first reconstructed block, and wherein the first clipping value is equal to the second clipping value for the second sample, or
    a distance between the first sample and the boundary of the first reconstructed block is different than a distance between the second sample and the boundary of the first reconstructed block, and wherein the first clipping value is different than the second clipping value.

5.  The method of claim 1, further comprising:
    based on the size of the first reconstructed block, determining that the deblocking filter is only applied to samples that are six or fewer samples removed from the boundary of the first reconstructed block, the method optionally further comprising one of:

    • in response to determining that the deblocking filter is applied to the samples within 6 rows or columns of the boundary of the first reconstructed block and in response to the first sample being adjacent to the boundary of the first reconstructed block, determining that the first clipping value is equal to 6, and
    • in response to determining that the deblocking filter is applied to the samples within 6 rows or columns of the boundary of the first reconstructed block and in response to the first sample being one sample removed from the boundary of the first reconstructed block, determining that the first clipping value is equal to 5 , and
    • in response to determining that the deblocking filter is applied to the samples within 6 rows or columns of the boundary of the first reconstructed block and in response to the first sample being two samples removed from the boundary of the first reconstructed block, determining that the first clipping value is equal to 4, and
    • in response to determining that the deblocking filter is applied to the samples within 6 rows or columns of the boundary of the first reconstructed block and in response to the first sample being three samples removed from the boundary of the first reconstructed block, determining that the first clipping value is equal to 3, and
• in response to determining that the deblocking filter is applied to the samples within 6 rows or columns of the boundary of the first reconstructed block and in response to the first sample being four samples removed from the boundary of the first reconstructed block, determining that the first clipping value is equal to 2, and
• in response to determining that the deblocking filter is applied to the samples within 6 rows or columns of the boundary of the first reconstructed block and in response to the first sample being five samples removed from the boundary of the first reconstructed block, determining that the first clipping value is equal to 1.

6. The method of claim 1, further comprising:
based on the size of the first reconstructed block, determining that the deblocking filter is applied to samples that are two or fewer samples removed from the boundary of the first reconstructed block, the method optionally further comprising one of:

• in response to determining that the deblocking filter is applied to the samples within 2 rows or columns of the boundary of the first reconstructed block and in response to the first sample being adjacent to the boundary of the first reconstructed block, determining that the first clipping value is equal to 6, and
• in response to determining that the deblocking filter is applied to the samples within 2 rows or columns of the boundary of the first reconstructed block and in response to the first sample being one sample removed from the boundary of the first reconstructed block, determining that the first clipping value is equal to 4, and
• in response to determining that the deblocking filter is applied to the samples within 2 rows or columns of the boundary of the first reconstructed block and in response to the first sample being two samples removed from the boundary of the first reconstructed block, determining that the first clipping value is equal to 2.

7. The method of claim 1, further comprising:

obtaining a second reconstructed block of video data, wherein the second reconstructed block includes a second sample with a second value, wherein the second reconstructed block shares the boundary with the first reconstructed block and wherein the first reconstructed block and the second reconstructed block are different sizes;
applying deblocking filtering to the second reconstructed block to determine a second deblocking filtered block;
determining a second clipping value for the second sample based on a location of the second sample relative to a boundary of the second reconstructed block and based on a size of the second reconstructed block;
in response to an amount of modification to the second sample caused by the deblocking filtering being greater than the second clipping value, modifying the second value by the second clipping value to determine a second filtered value for the second sample; and
outputting a second deblocking filtered block of video data, wherein, in the outputted second deblocking filtered block, the second sample has the second filtered value.

8. The method of claim 7, wherein:

applying deblocking filtering to the first reconstructed block to determine the first deblocking filtered block comprises filtering samples in the first reconstructed block with a first filter of a first length; and
applying deblocking filtering to the second reconstructed block to determine the second deblocking filtered block comprises filtering samples in the second reconstructed block with a second filter of a second length that is different than the first length.

9. The method of claim 1, wherein the method is performed as part of a video encoding process.

10. A device for decoding video data, the device comprising:

a memory configured to store video data;
one or more processors implemented in circuitry and configured to:

obtain (400) a first reconstructed block of video data, wherein the first reconstructed block includes a first sample with a first value;
apply (402) deblocking filtering to the first reconstructed block to create a deblocking filtered block;
determine (404) a first clipping value for the first sample based on a location of the first sample relative to a boundary of the first reconstructed block and based on a size of the first reconstructed block;

compare (406) the first clipping value to an amount of modification to the first sample caused by the deblocking filtering;

in response to the amount of modification to the first sample caused by the deblocking filtering being greater than the first clipping value, modify (408) the first value by the first clipping value to determine a first filtered value for the first sample, wherein the determined first filtered value is equal to the first value plus the first clipping value if the modification to the first sample caused by the deblocking filtering is positive or is equal to the first value minus the first clipping value if the modification to the first sample caused by the deblocking filtering is negative; and

output a deblocking filtered block of video data, wherein, in the outputted deblocking filtered block, the first sample is replaced by the first filtered value in response to the amount of modification to the first sample caused by the deblocking filtering being greater than the first clipping value.

11. The device of claim 10, wherein the one or more processors are further configured to:

based on the size of the first reconstructed block, determine that the deblocking filter is only applied to samples that are six or fewer samples removed from the boundary of the first reconstructed block.

12. A computer-readable storage medium storing instructions that when executed by one or more processors cause the one or more processor to perform a method according to any of claims 1 to 9.

**Patentansprüche**

1. Verfahren zum Decodieren von Videodaten, wobei das Verfahren Folgendes beinhaltet:

Erhalten (400) eines ersten rekonstruierten Blocks von Videodaten, wobei der erste rekonstruierte Block ein erstes Sample mit einem ersten Wert umfasst;

Anwenden (402) von Entblockungsfilterung auf den ersten rekonstruierten Block, um einen entblockungsgefilterten Block zu erzeugen;

Bestimmen (404) eines ersten Clipping-Werts für das erste Sample auf der Basis einer Position des ersten Sample relativ zu einer Begrenzung des ersten rekonstruierten Blocks und auf der Basis einer Größe des ersten rekonstruierten Blocks;

Vergleichen (406) des ersten Clipping-Werts mit einem Betrag an durch die Entblockungsfilterung verursachter Modifikation des ersten Sample;

Modifizieren (408), als Reaktion darauf, dass der Betrag an durch die Entblockungsfilterung verursachter Modifikation des ersten Sample größer ist als der erste Clipping-Wert, des ersten Wertes um den ersten Clipping-Wert, um einen ersten gefilterten Wert für das erste Sample zu bestimmen, wobei der bestimmte erste gefilterte Wert gleich dem ersten Wert plus dem ersten Clipping-Wert ist, wenn die durch die Entblockungsfilterung verursachte Modifikation des ersten Sample positiv ist, oder gleich dem ersten Wert minus dem ersten Clipping-Wert ist, wenn die durch die Entblockungsfilterung verursachte Modifikation des ersten Sample negativ ist; und

Ausgeben eines entblockungsgefilterten Blocks von Videodaten, wobei in dem ausgegebenen entblockungsgefilterten Block das erste Sample als Reaktion darauf durch den ersten gefilterten Wert ersetzt wird, dass der Betrag an durch die Entblockungsfilterung verursachter Modifikation des ersten Sample größer als der erste Clipping-Wert ist.

2. Verfahren nach Anspruch 1, das ferner Folgendes beinhaltet:
Bestimmen des ersten Clipping-Werts für das erste Sample ferner auf der Basis eines Entblockungsfilterungsmodus für den ersten rekonstruierten Block.

3. Verfahren nach Anspruch 1, wobei der erste rekonstruierte Block ein zweites Sample mit einem zweiten Wert umfasst, wobei das Verfahren ferner Folgendes beinhaltet:

Bestimmen eines zweiten Clipping-Werts für das zweite Sample auf der Basis einer Position des zweiten Sample relativ zur Begrenzung des ersten rekonstruierten Blocks und auf der Basis der Größe des ersten rekonstruierten Blocks;

Modifizieren, als Reaktion darauf, dass ein Betrag an durch die Entblockungsfilterung verursachter Modifikation des zweiten Sample kleiner als der zweite Clipping-Wert ist, des zweiten Werts um den Betrag an Modifikation des zweiten Sample, um einen zweiten gefilterten Wert für das zweite Sample zu bestimmen; und
wobei in dem entblockungsgefilterten Block das zweite Sample den zweiten gefilterten Wert aufweist.

4. Verfahren nach Anspruch 3, wobei entweder:

eine Distanz zwischen dem ersten Sample und der Begrenzung des ersten rekonstruierten Blocks gleich einer Distanz zwischen dem zweiten Sample und der Begrenzung des ersten rekonstruierten Blocks ist, und wobei der erste Clipping-Wert gleich dem zweiten Clipping-Wert für das zweite Sample ist, oder
eine Distanz zwischen dem ersten Sample und der Begrenzung des ersten rekonstruierten Blocks sich von einer Distanz zwischen dem zweiten Sample und der Begrenzung des ersten rekonstruierten Blocks unterscheidet, und wobei sich der erste Clipping-Wert vom zweiten Clipping-Wert unterscheidet.

5. Verfahren nach Anspruch 1, das ferner Folgendes beinhaltet:
Bestimmen auf der Basis der Größe des ersten rekonstruierten Blocks, dass der Entblockungsfilter nur auf Samples angewendet wird, die sechs oder weniger Samples von der Begrenzung des ersten rekonstruierten Blocks entfernt sind, wobei das Verfahren optional ferner eines beinhaltet von:

• Bestimmen, dass der erste Clipping-Wert gleich 6 ist, als Reaktion auf das Bestimmen, dass der Entblockungsfilter auf die Samples innerhalb von 6 Zeilen oder Spalten der Begrenzung des ersten rekonstruierten Blocks angewendet wird, und als Reaktion darauf, dass das erste Sample neben der Begrenzung des ersten rekonstruierten Blocks liegt, und
• Bestimmen, dass der erste Clipping-Wert gleich 5 ist, als Reaktion auf das Bestimmen, dass der Entblockungsfilter auf die Samples innerhalb von 6 Zeilen oder Spalten der Begrenzung des ersten rekonstruierten Blocks angewendet wird, und als Reaktion darauf, dass das erste Sample um ein Sample von der Begrenzung des ersten rekonstruierten Blocks entfernt ist, und
• Bestimmen, dass der erste Clipping-Wert gleich 4 ist, als Reaktion auf das Bestimmen, dass der Entblockungsfilter auf die Samples innerhalb von 6 Zeilen oder Spalten der Begrenzung des ersten rekonstruierten Blocks angewendet wird, und als Reaktion darauf, dass das erste Sample um zwei Samples von der Begrenzung des ersten rekonstruierten Blocks entfernt ist, und
• Bestimmen, dass der erste Clipping-Wert gleich 3 ist, als Reaktion auf das Bestimmen, dass der Entblockungsfilter auf die Samples innerhalb von 6 Zeilen oder Spalten der Begrenzung des ersten rekonstruierten Blocks angewendet wird, und als Reaktion darauf, dass das erste Sample um drei Samples von der Begrenzung des ersten rekonstruierten Blocks entfernt ist, und
• Bestimmen, dass der erste Clipping-Wert gleich 2 ist, als Reaktion auf das Bestimmen, dass der Entblockungsfilter auf die Samples innerhalb von 6 Zeilen oder Spalten der Begrenzung des ersten rekonstruierten Blocks angewendet wird, und als Reaktion darauf, dass das erste Sample um vier Samples von der Begrenzung des ersten rekonstruierten Blocks entfernt ist, und
• Bestimmen, dass der erste Clipping-Wert gleich 1 ist, als Reaktion auf das Bestimmen, dass der Entblockungsfilter auf die Samples innerhalb von 6 Zeilen oder Spalten der Begrenzung des ersten rekonstruierten Blocks angewendet wird, und als Reaktion darauf, dass das erste Sample um fünf Samples von der Begrenzung des ersten rekonstruierten Blocks entfernt ist.

6. Verfahren nach Anspruch 1, das ferner Folgendes beinhaltet:
Bestimmen, auf der Basis der Größe des ersten rekonstruierten Blocks, dass der Entblockungsfilter auf Samples angewendet wird, die um zwei oder weniger Samples von der Begrenzung des ersten rekonstruierten Blocks entfernt sind, wobei das Verfahren optional ferner eines beinhaltet von:

• Bestimmen, dass der erste Clipping-Wert gleich 6 ist, als Reaktion auf das Bestimmen, dass der Entblockungsfilter auf die Samples innerhalb von 2 Zeilen oder Spalten der Begrenzung des ersten rekonstruierten Blocks angewendet wird, und als Reaktion darauf, dass das erste Sample neben der Begrenzung des ersten rekonstruierten Blocks liegt, und
• Bestimmen, dass der erste Clipping-Wert gleich 4 ist, als Reaktion auf das Bestimmen, dass der Entblockungsfilter auf die Samples innerhalb von 2 Zeilen oder Spalten der Begrenzung des ersten rekonstruierten Blocks angewendet wird, und als Reaktion darauf, dass das erste Sample um ein Sample von der Begrenzung des ersten rekonstruierten Blocks entfernt ist, und
• Bestimmen, dass der erste Clipping-Wert gleich 2 ist, als Reaktion auf das Bestimmen, dass der Entblockungsfilter auf die Samples innerhalb von 2 Zeilen oder Spalten der Begrenzung des ersten rekonstruierten Blocks angewendet wird, und als Reaktion darauf, dass das erste Sample um zwei Samples von der Begrenzung des ersten rekonstruierten Blocks entfernt ist.

7. Verfahren nach Anspruch 1, das ferner Folgendes beinhaltet:

Erhalten eines zweiten rekonstruierten Blocks von Videodaten, wobei der zweite rekonstruierte Block ein zweites Sample mit einem zweiten Wert enthält, wobei der zweite rekonstruierte Block die Begrenzung mit dem ersten rekonstruierten Block teilt und wobei der erste rekonstruierte Block und der zweite rekonstruierte Block unterschiedliche Größen haben;

Anwenden von Entblockungsfilterung auf den zweiten rekonstruierten Block, um einen zweiten entblockungsgefilterten Block zu bestimmen;

Bestimmen eines zweiten Clipping-Werts für das zweite Sample auf der Basis einer Position des zweiten Sample relativ zu einer Begrenzung des zweiten rekonstruierten Blocks und auf der Basis einer Größe des zweiten rekonstruierten Blocks;

Modifizieren, als Reaktion darauf, dass ein Betrag an durch die Entblockungsfilterung verursachter Modifikation des zweiten Sample größer ist als der zweite Clipping-Wert, des zweiten Werts um den zweiten Clipping-Wert, um einen zweiten gefilterten Wert für das zweite Sample zu bestimmen; und

Ausgeben eines zweiten entblockungsgefilterten Blocks von Videodaten, wobei in dem ausgegebenen zweiten entblockungsgefilterten Block das zweite Sample den zweiten gefilterten Wert aufweist.

8. Verfahren nach Anspruch 7, wobei:

das Anwenden von Entblockungsfilterung auf den ersten rekonstruierten Block zum Bestimmen des ersten entblockungsgefilterten Blocks das Filtern von Samples im ersten rekonstruierten Block mit einem ersten Filter einer ersten Länge beinhaltet; und

das Anwenden von Entblockungsfilterung auf den zweiten rekonstruierten Block zum Bestimmen des zweiten entblockungsgefilterten Blocks das Filtern von Samples im zweiten rekonstruierten Block mit einem zweiten Filter einer zweiten Länge beinhaltet, die sich von der ersten Länge unterscheidet.

9. Verfahren nach Anspruch 1, wobei das Verfahren als Teil eines Videoencodierungsprozesses durchgeführt wird.

10. Gerät zum Decodieren von Videodaten, wobei das Gerät Folgendes umfasst:

einen Speicher, der zum Speichern von Videodaten konfiguriert ist;
einen oder mehrere Prozessoren, die in Schaltung implementiert und konfiguriert sind zum:

Erhalten (400) eines ersten rekonstruierten Blocks von Videodaten, wobei der erste rekonstruierte Block ein erstes Sample mit einem ersten Wert umfasst;

Anwenden (402) von Entblockungsfilterung auf den ersten rekonstruierten Block, um einen entblockungsgefilterten Block zu erzeugen;

Bestimmen (404) eines ersten Clipping-Werts für das erste Sample auf der Basis einer Position des ersten Sample relativ zu einer Begrenzung des ersten rekonstruierten Blocks und auf der Basis einer Größe des ersten rekonstruierten Blocks;

Vergleichen (406) des ersten Clipping-Werts mit einem Betrag an durch die Entblockungsfilterung verursachter Modifikation des ersten Sample;

Modifizieren (408), als Reaktion darauf, dass der Betrag an durch die Entblockungsfilterung verursachter Modifikation des ersten Sample größer ist als der erste Clipping-Wert, des ersten Wertes um den ersten Clipping-Wert, um einen ersten gefilterten Wert für das erste Sample zu bestimmen, wobei der bestimmte erste gefilterte Wert gleich dem ersten Wert plus dem ersten Clipping-Wert ist, wenn die durch die Entblockungsfilterung verursachte Modifikation des ersten Sample positiv ist, oder gleich dem ersten Wert minus dem ersten Clipping-Wert ist, wenn die durch die Entblockungsfilterung verursachte Modifikation des ersten Sample negativ ist; und

Ausgeben eines entblockungsgefilterten Blocks von Videodaten, wobei in dem ausgegebenen entblockungsgefilterten Block das erste Sample als Reaktion darauf durch den ersten gefilterten Wert ersetzt wird, dass der Betrag an durch die Entblockungsfilterung verursachter Modifikation des ersten Sample größer als der erste Clipping-Wert ist.

11. Gerät nach Anspruch 10, wobei die ein oder mehreren Prozessoren ferner konfiguriert sind zum:
Bestimmen, auf der Basis der Größe des ersten rekonstruierten Blocks, dass der Entblockungsfilter nur auf Samples angewendet wird, die um sechs oder weniger Samples von der Begrenzung des ersten rekonstruierten Blocks entfernt sind.

**12.** Computerlesbares Speichermedium, das Befehle speichert, die bei Ausführung durch einen oder mehrere Prozessoren die ein oder mehreren Prozessoren zum Durchführen eines Verfahrens nach einem der Ansprüche 1 bis 9 veranlassen.


**Revendications**

**1.** Procédé de décodage de données vidéo, le procédé comprenant :

l'obtention (400) d'un premier bloc reconstruit de données vidéo, dans lequel le premier bloc reconstruit comporte un premier échantillon ayant une première valeur ;
l'application (402) d'un filtrage de déblocage au premier bloc reconstruit pour créer un bloc filtré de déblocage ;
la détermination (404) d'une première valeur d'écrêtage du premier échantillon sur la base d'un emplacement du premier échantillon par rapport à une frontière du premier bloc reconstruit et sur la base d'une taille du premier bloc reconstruit ;
la comparaison (406) de la première valeur d'écrêtage à une quantité de modification du premier échantillon causée par le filtrage de déblocage ;
lorsque la quantité de modification du premier échantillon causée par le filtrage de déblocage est supérieure à la première valeur d'écrêtage, la modification (408) de la première valeur par la première valeur d'écrêtage pour déterminer une première valeur filtrée du premier échantillon, dans lequel la première valeur filtrée déterminée est égale à la première valeur plus la première valeur d'écrêtage si la modification du premier échantillon causée par le filtrage de déblocage est positive ou égale à la première valeur moins la première valeur d'écrêtage si la modification du premier échantillon causée par le filtrage de déblocage est négative ; et
la délivrance en sortie d'un bloc filtré de déblocage, dans lequel, dans le bloc filtré de déblocage délivré en sortie, le premier échantillon est remplacé par la première valeur filtrée lorsque la quantité de modification du premier échantillon causée par le filtrage de déblocage est supérieure à la première valeur d'écrêtage.

**2.** Procédé selon la revendication 1, comprenant en outre :
la détermination de la première valeur d'écrêtage du premier échantillon sur la base en outre d'un mode de filtrage de déblocage pour le premier bloc reconstruit.

**3.** Procédé selon la revendication 1, dans lequel le premier bloc reconstruit comporte un second échantillon ayant une seconde valeur, le procédé comprenant en outre :

la détermination d'une seconde valeur d'écrêtage du second échantillon sur la base d'un emplacement du second échantillon par rapport à la frontière du premier bloc reconstruit et sur la base de la taille du premier bloc reconstruit ;
lorsqu'une quantité de modification du second échantillon causée par le filtrage de déblocage est inférieure à la seconde valeur d'écrêtage, la modification de la seconde valeur par la quantité de modification du second échantillon pour déterminer une seconde valeur filtrée du second échantillon ; et
dans lequel, dans le bloc filtré de déblocage, le second échantillon a la seconde valeur filtrée.

**4.** Procédé selon la revendication 3, dans lequel soit :

une distance entre le premier échantillon et la frontière du premier bloc reconstruit est égale à une distance entre le second échantillon et la frontière du premier bloc reconstruit, et dans lequel la première valeur d'écrêtage est égale à la seconde valeur d'écrêtage du second échantillon, soit
une distance entre le premier échantillon et la frontière du premier bloc reconstruit est différente d'une distance entre le second échantillon et la frontière du premier bloc reconstruit, et dans lequel la première valeur d'écrêtage est différente de la seconde valeur d'écrêtage.

**5.** Procédé selon la revendication l, comprenant en outre :
sur la base de la taille du premier bloc reconstruit, la détermination que le filtre de déblocage n'est appliqué qu'aux échantillons séparés de six échantillons ou moins de la frontière du premier bloc reconstruit, le procédé comprenant éventuellement l'une des étapes suivantes :

• en réponse à la détermination que le filtre de déblocage est appliqué aux échantillons situés en-deçà de 6 lignes ou colonnes de la frontière du premier bloc reconstruit et en réponse au fait que le premier échantillon est adjacent à la frontière du premier bloc reconstruit, la détermination que la première valeur d'écrêtage est égale à 6, et

• en réponse à la détermination que le filtre de déblocage est appliqué aux échantillons situés en-deçà de 6 lignes ou colonnes de la frontière du premier bloc reconstruit et en réponse au fait que le premier échantillon est séparé d'un échantillon de la frontière du premier bloc reconstruit, la détermination que la première valeur d'écrêtage est égale à 5, et

• en réponse à la détermination que le filtre de déblocage est appliqué aux échantillons situés en-deçà de 6 lignes ou colonnes de la frontière du premier bloc reconstruit et en réponse au fait que le premier échantillon est séparé de deux échantillons de la frontière du premier bloc reconstruit, la détermination que la première valeur d'écrêtage est égale à 4, et

• en réponse à la détermination que le filtre de déblocage est appliqué aux échantillons situés en-deçà de 6 lignes ou colonnes de la frontière du premier bloc reconstruit et en réponse au fait que le premier échantillon est séparé de trois échantillons de la frontière du premier bloc reconstruit, la détermination que la première valeur d'écrêtage est égale à 3, et

• en réponse à la détermination que le filtre de déblocage est appliqué aux échantillons situés en-deçà de 6 lignes ou colonnes de la frontière du premier bloc reconstruit et en réponse au fait que le premier échantillon est séparé de quatre échantillons de la frontière du premier bloc reconstruit, la détermination que la première valeur d'écrêtage est égale à 2, et

• en réponse à la détermination que le filtre de déblocage est appliqué aux échantillons situés en-deçà de 6 lignes ou colonnes de la frontière du premier bloc reconstruit et en réponse au fait que le premier échantillon est séparé de cinq échantillons de la frontière du premier bloc reconstruit, la détermination que la première valeur d'écrêtage est égale à 1.

6. Procédé selon la revendication 1, comprenant en outre :
sur la base de la taille du premier bloc reconstruit, la détermination que le filtre de déblocage est appliqué à des échantillons séparés de deux échantillons ou moins de la frontière du premier bloc reconstruit, le procédé comprenant éventuellement l'une des étapes suivantes :

• en réponse à la détermination que le filtre de déblocage est appliqué aux échantillons situés en-deçà de 2 lignes ou colonnes de la frontière du premier bloc reconstruit et en réponse au fait que le premier échantillon est adjacent à la frontière du premier bloc reconstruit, la détermination que la première valeur d'écrêtage est égale à 6, et

• en réponse à la détermination que le filtre de déblocage est appliqué aux échantillons situés en-deçà de 2 lignes ou colonnes de la frontière du premier bloc reconstruit et en réponse au fait que le premier échantillon est séparé d'un échantillon de la frontière du premier bloc reconstruit, la détermination que la première valeur d'écrêtage est égale à 4, et

• en réponse à la détermination que le filtre de déblocage est appliqué aux échantillons situés en-deçà de 2 lignes ou colonnes de la frontière du premier bloc reconstruit et en réponse au fait que le premier échantillon est séparé de deux échantillons de la frontière du premier bloc reconstruit, la détermination que la première valeur d'écrêtage est égale à 2.

7. Procédé selon la revendication 1, comprenant en outre :

l'obtention d'un second bloc reconstruit de données vidéo, dans lequel le second bloc reconstruit comporte un second échantillon ayant une seconde valeur, dans lequel le second bloc reconstruit partage la frontière avec le premier bloc reconstruit et dans lequel le premier bloc reconstruit et le second bloc reconstruit ont des tailles différentes ;

l'application d'un filtrage de déblocage au second bloc reconstruit pour déterminer un second bloc filtré de déblocage ;

la détermination d'une seconde valeur d'écrêtage du second échantillon sur la base d'un emplacement du second échantillon par rapport à une frontière du second bloc reconstruit et sur la base d'une taille du second bloc reconstruit ;

lorsqu'une quantité de modification du second échantillon causée par le filtrage de déblocage est supérieure à la seconde valeur d'écrêtage, la modification de la seconde valeur par la seconde valeur d'écrêtage pour déterminer une seconde valeur filtrée du second échantillon ; et

la délivrance en sortie d'un second bloc filtré de déblocage de données vidéo, dans lequel, dans le second bloc filtré de déblocage délivré en sortie, le second échantillon a la seconde valeur filtrée.

**8.** Procédé selon la revendication 7, dans lequel :

l'application d'un filtrage de déblocage au premier bloc reconstruit pour déterminer le premier bloc filtré de déblocage comprend le filtrage d'échantillons dans le premier bloc reconstruit avec un premier filtre d'une première longueur ; et
l'application d'un filtrage de déblocage au second bloc reconstruit pour déterminer le second bloc filtré de déblocage comprend le filtrage d'échantillons dans le second bloc reconstruit avec un second filtre d'une seconde longueur différente de la première longueur.

**9.** Procédé selon la revendication 1, le procédé étant réalisé dans le cadre d'un processus d'encodage vidéo.

**10.** Dispositif de décodage de données vidéo, le dispositif comprenant :

une mémoire configurée pour stocker des données vidéo ;
un ou plusieurs processeurs implémentés dans des circuits et configurés pour :

obtenir (400) un premier bloc reconstruit de données vidéo, dans lequel le premier bloc reconstruit comporte un premier échantillon ayant une première valeur ;
appliquer (402) un filtrage de déblocage au premier bloc reconstruit pour créer un bloc filtré de déblocage ;
déterminer (404) une première valeur d'écrêtage du premier échantillon sur la base d'un emplacement du premier échantillon par rapport à une frontière du premier bloc reconstruit et sur la base d'une taille du premier bloc reconstruit ;
comparer (406) la première valeur d'écrêtage à une quantité de modification du premier échantillon causée par le filtrage de déblocage ;
lorsque la quantité de modification du premier échantillon causée par le filtrage de déblocage est supérieure à la première valeur d'écrêtage, modifier (408) la première valeur par la première valeur d'écrêtage pour déterminer une première valeur filtrée du premier échantillon, dans lequel la première valeur filtrée déterminée est égale à la première valeur plus la première valeur d'écrêtage si la modification du premier échantillon causée par le filtrage de déblocage est positive ou égale à la première valeur moins la première valeur d'écrêtage si la modification du premier échantillon causée par le filtrage de déblocage est négative ; et
délivrer en sortie un bloc filtré de déblocage, dans lequel, dans le bloc filtré de déblocage délivré en sortie, le premier échantillon est remplacé par la première valeur filtrée lorsque la quantité de modification du premier échantillon causée par le filtrage de déblocage est supérieure à la première valeur d'écrêtage.

**11.** Dispositif selon la revendication 10, dans lequel les un ou plusieurs processeurs sont configurés en outre pour :
sur la base de la taille du premier bloc reconstruit, déterminer que le filtre de déblocage n'est appliqué qu'aux échantillons qui sont séparés de six échantillons ou moins de la frontière du premier bloc reconstruit.

**12.** Support de stockage lisible par ordinateur stockant des instructions qui, une fois exécutées par un ou plusieurs processeurs, amènent les un ou plusieurs processeurs à réaliser un procédé selon l'une quelconque des revendications 1 à 9.

100

**SOURCE DEVICE**
**102**

**VIDEO SOURCE**
**104**

**MEMORY**
**106**

**VIDEO ENCODER**
**200**

**OUTPUT INTERFACE**
**108**

**DESTINATION DEVICE**
**116**

**DISPLAY DEVICE**
**118**

**MEMORY**
**120**

**VIDEO DECODER**
**300**

**INPUT INTERFACE**
**122**

110

112

114

**FIG. 1**

130

1          0

1              1

0

FIG. 2A

0

132

FIG. 2B

FIG. 3

EP 3 844 958 B1

152

—150

154

—158A

—158C

...... $p_{2,0}$ $p_{1,0}$ $p_{0,0}$ $q_{0,0}$ $q_{1,0}$ $q_{2,0}$ ......

...... $p_{2,1}$ $p_{1,1}$ $p_{0,1}$ $q_{0,1}$ $q_{1,1}$ $q_{2,1}$ ......

...... $p_{2,2}$ $p_{1,2}$ $p_{0,2}$ $q_{0,2}$ $q_{1,2}$ $q_{2,2}$ ......

—158B

—158D

...... $p_{2,3}$ $p_{1,3}$ $p_{0,3}$ $q_{0,3}$ $q_{1,3}$ $q_{2,3}$ ......

FIG. 4

FIG. 5

FIG. 6

FIG. 7

**FILTER UNIT**
**312**

UNFILTERED
RECONSTRUCTED
VIDEO BLOCKS

DEBLOCK
FILTER
**342**

SAO
**344**

ALF/GALF
**346**

FILTERED
RECONSTRUCTED
VIDEO BLOCKS

# FIG. 8

```
┌─────────────────────────────────┐  ⟋350
│      PREDICT CURRENT BLOCK      │
└─────────────────────────────────┘
                 │
                 ▼
┌─────────────────────────────────┐  ⟋352
│      CALCULATE RESIDUAL BLOCK   │
│        FOR CURRENT BLOCK        │
└─────────────────────────────────┘
                 │
                 ▼
┌─────────────────────────────────┐  ⟋354
│      TRANSFORM AND QUANTIZE     │
│         RESIDUAL BLOCK          │
└─────────────────────────────────┘
                 │
                 ▼
┌─────────────────────────────────┐  ⟋356
│      SCAN COEFFICIENTS OF       │
│         RESIDUAL BLOCK          │
└─────────────────────────────────┘
                 │
                 ▼
┌─────────────────────────────────┐  ⟋358
│        ENTROPY ENCODE           │
│         COEFFICIENTS            │
└─────────────────────────────────┘
                 │
                 ▼
┌─────────────────────────────────┐  ⟋360
│      OUTPUT ENTROPY CODED       │
│      DATA FOR COEFFICIENTS      │
└─────────────────────────────────┘
```

# FIG. 9

RECEIVE ENTROPY CODED
DATA FOR CURRENT BLOCK ⟋370

ENTROPY DECODE DATA TO
DETERMINE PREDICTION AND
REPRODUCE COEFFICIENTS ⟋372

PREDICT CURRENT BLOCK ⟋374

INVERSE SCAN REPRODUCED
COEFFICIENTS ⟋376

INVERSE QUANTIZE AND
INVERSE TRANSFORM
COEFFICIENTS TO PRODUCE
RESIDUAL BLOCK ⟋378

COMBINE PREDICTED BLOCK
AND RESIDUAL BLOCK ⟋380

FILTER RECONSTRUCTED
BLOCKS ⟋382

FIG. 10

OBTAIN A FIRST RECONSTRUCTED BLOCK OF VIDEO DATA THAT INCLUDES A FIRST SAMPLE WITH A FIRST VALUE ⌐400

↓

APPLY DEBLOCK FILTERING TO THE FIRST RECONSTRUCTED BLOCK TO CREATE A DEBLOCK FILTERED BLOCK ⌐402

↓

DETERMINE A FIRST CLIPPING VALUE FOR THE FIRST SAMPLE BASED ON A LOCATION OF THE FIRST SAMPLE RELATIVE TO A BOUNDARY OF THE RECONSTRUCTED BLOCK AND BASED ON A SIZE OF THE RECONSTRUCTED BLOCK ⌐404

↓

COMPARE THE CLIPPING VALUE TO AN AMOUNT OF MODIFICATION TO THE FIRST SAMPLE CAUSED BY THE DEBLOCK FILTERING ⌐406

↓

⌐408
AMOUNT OF MODIFICATION GREATER THAN THE FIRST CLIPPING VALUE?

YES        NO

⌐410
MODIFY THE FIRST VALUE BY THE FIRST CLIPPING VALUE

⌐412
MODIFY THE FIRST VALUE BY THE AMOUNT OF MODIFICATION CAUSED BY THE DEBLOCK FILTERING

**FIG. 11**

**REFERENCES CITED IN THE DESCRIPTION**

**Patent documents cited in the description**

- US 20130028531 A1

- EP 3200454 A1

**Non-patent literature cited in the description**

- **RUSANOVSKYY et al.** CE2: Tests on long deblocking (CE2.2.1.4). *Joint Video Experts Team (JVET) of ITU-T SG 16 WP 3 and ISO/IEC JTC 1/SC 29/WG 11*
- **DONG et al.** Multi-Dimensional Filter Selection for Deblocking. *Joint Video Experts Team (JVET) of ITU-T SG 16 WP 3 and ISO/IEC JTC 1/SC 29/WG 11*

- **BROSS et al.** Versatile Video Coding (Draft 6). *Joint Video Experts Team (JVET) of ITU-T SG 16 WP 3 and ISO/IEC JTC 1/SC 29/WG 11*, 03 July 2019